# EUROPEAN PATENT APPLICATION

(11) **EP 4 485 396 A1**
(43) Date of publication of application: **01.01.2025**
(21) Application number: 23787716.2
(22) Date of filing: 11.04.2023
(51) Int. Cl.: G06V 40/16

(54) **FACIAL FEATURE DETECTION METHOD, AND READABLE MEDIUM AND ELECTRONIC DEVICE**

(30) Priority: 15.04.2022 CN 202210400185
(71) Applicant: Huawei Technologies Co., Ltd., Shenzhen, Guangdong 518129 (CN)
(72) Inventor: DING, Xin, Shenzhen, Guangdong 518129 (CN); HU, Hongwei, Shenzhen, Guangdong 518129 (CN); ZHOU, Yidan, Shenzhen, Guangdong 518129 (CN); ZHAO, Lin, Shenzhen, Guangdong 518129 (CN); GAO, Wenmei, Shenzhen, Guangdong 518129 (CN)
(74) Representative: Körber, Martin Hans
(86) International application number: PCT/CN2023/087675
(87) International publication number: WO 2023/198073

(57) **Abstract**

This application relates to the field of image processing technologies, and in particular, to a facial feature detection method, a readable medium, and an electronic device. The method includes: detecting a detection instruction for detecting a facial feature of a user; obtaining a plurality of ultraviolet images including a face of the user that are captured by using a first camera; obtaining a first preview image including the face of the user that is captured by using a second camera, where the first preview image is a color image; determining a facial feature of the user in the first preview image based on a facial feature of the user in each ultraviolet image; adjusting a pixel value of a pixel of a facial region of the user in the first preview image based on the facial feature of the user in the first preview image, to obtain a target image; and displaying the target image by using a first screen. The technical solutions of this application can meet a real-time requirement of the user for facial feature detection, maximize display of a color detection result, and help improve user experience.

## Description

This application claims priority to Chinese Patent Application No. 202210400185.X, filed with the China National Intellectual Property Administration on April 15, 2022 and entitled "FACIAL FEATURE DETECTION METHOD, READABLE MEDIUM, AND ELECTRONIC DEVICE", which is incorporated herein by reference in its entirety.

### TECHNICAL FIELD

This application relates to the field of image processing technologies, and in particular, to a facial feature detection method, a readable medium, and an electronic device.

### BACKGROUND

Skin aging and damage are closely related to long-term exposure to sunlight. Ultraviolet in the sunlight is the most damaging component for skin. Long-wave ultraviolet (Ultraviolet-A, UVA) mainly causes photoaging and a skin tumor, medium-wave ultraviolet (Ultraviolet-B, UVB) mainly causes sunburn, and short-wave ultraviolet (Ultraviolet-C, UVC) is largely blocked by the atmosphere and can be ignored. Because sunscreen can absorb the ultraviolet, more people choose to apply the sunscreen to reduce damage of the ultraviolet to the skin. People usually apply the sunscreen based on feelings. In many cases, a sunscreen application status is invisible. For example, whether an application region is completely covered, whether an application amount is sufficient, whether the sunscreen is evenly applied, and when the sunscreen needs to be reapplied are all concerned by people but cannot be intuitively sensed.

### SUMMARY

In view of this, embodiments of this application provide a facial feature detection method, a readable medium, and an electronic device. The technical solutions of this application are applied to the electronic device. The electronic device includes a first camera and a second camera that are located on different sides of the electronic device, and a first screen that is located on a same side as the second camera. In the technical solutions of this application, a facial feature of a user in a first preview image captured by using the second camera is determined by using facial features in a plurality of ultraviolet images including a face of the user that are captured by using the first camera; a pixel value of a pixel of a facial region of the user in the first preview image is adjusted based on the facial feature of the user in the first preview image, to obtain a target image; and the target image is displayed by using the first screen. In response to a detection instruction for detecting a facial feature of the user, the electronic device obtains the ultraviolet images in real time, determines the facial feature of the user in the first preview image captured by using the second camera based on the facial features of the user corresponding to the ultraviolet images that are obtained in real time, and finally displays the obtained target image on a display with a relatively large area. Therefore, the technical solutions of this application can meet a real-time requirement of the user for facial feature detection, maximize display of a color detection result, and help improve user experience.

According to a first aspect, an embodiment of this application provides a facial feature detection method, applied to an electronic device. The electronic device includes a first camera and a second camera that are located on different sides of the electronic device, and a first screen located on a same side as the second camera. The facial feature detection method includes: detecting a detection instruction for detecting a facial feature of a user; obtaining, in response to the detection instruction, a plurality of ultraviolet images including a face of the user that are captured by using the first camera; obtaining a first preview image including the face of the user that is captured by using the second camera, where the first preview image is a color image; determining a facial feature of the user in the first preview image based on a facial feature of the user in each ultraviolet image; adjusting a pixel value of a pixel of a facial region of the user in the first preview image based on the determined facial feature of the user in the first preview image, to obtain a target image; and displaying the target image by using the first screen.

In response to a detection instruction for detecting a facial feature of the user, the electronic device obtains the ultraviolet images in real time, determines the facial feature of the user in the first preview image captured by using the second camera based on the facial features of the user corresponding to the ultraviolet images that are obtained in real time, and finally displays the obtained target image on the first screen with a relatively large area. Therefore, the technical solutions of this application can meet a real-time requirement of the user for facial feature detection, maximize display of a color detection result, and help improve user experience.

In a possible implementation of the first aspect, the ultraviolet image is used to detect a sunscreen application status of the face of the user. For example, the sunscreen application status of the face of the user is detected by using the ultraviolet image, the first screen is an internal screen, and an area of the internal screen is relatively large. It should be understood that, when the ultraviolet image is used to detect the sunscreen application status of the face of the user, because the target image is an RGB image and is obtained based on the front-facing first preview image shot in real time, final display of the target image on the internal screen can meet a real-time requirement of the user for sunscreen detection, the sunscreen detection result presented to the user is more beautiful, and display of the detection result may be further maximized. This facilitates the user to view the detection result, and improves user experience.

In a possible implementation of the first aspect, the obtaining, in response to the detection instruction, a plurality of ultraviolet images including a face of the user that are captured by using the first camera in the foregoing method includes: in response to the detection instruction, when it is determined that a plurality of ultraviolet images including the face of the user need to be recaptured, prompting the user to face the first camera, and capturing, by using the first camera, the plurality of ultraviolet images including the face of the user.

In a possible implementation of the first aspect, the obtaining a first preview image including the face of the user that is captured by using the second camera includes: when it is determined that recapture of the plurality of ultraviolet images including the face of the user is completed, or when it is determined that there is no need to recapture a plurality of ultraviolet images including the face of the user, prompting the user to face the second camera, and capturing, by using the second camera, the first preview image including the face of the user.

For example, if the electronic device stores ultraviolet images of the face of the user at various angles that are shot within a preset time period, for example, five minutes, the ultraviolet image of the face of the user may not need to be recaptured. For another example, after it is determined that the ultraviolet images of the face of the user need to be recaptured, ultraviolet images of the face of the user at various angles that meet a condition like a location and a size is recaptured, the user is prompted to face the second camera, and the first preview image including the face of the user is captured by using the second camera.

In a possible implementation of the first aspect, the method further includes: determining a sunscreen detection result of the face of the user in each ultraviolet image, key point information of each ultraviolet image, and key point information of the first preview image.

The ultraviolet image may be a grayscale image, or a black-and-white image obtained by performing binarization processing on the grayscale image. In the ultraviolet image, there is a relatively obvious difference in pixel values corresponding to regions with different sunscreen application statuses of the face of the user. The sunscreen application status of the face of the user can be quickly determined based on the ultraviolet image.

In a possible implementation of the first aspect, the facial feature of the user includes the sunscreen detection result of the face of the user; and the determining a facial feature of the user in the first preview image based on a facial feature of the user in each ultraviolet image includes: determining a sunscreen detection result of the face in the first preview image based on the determined sunscreen detection result of the face of the user in each ultraviolet image, the determined key point information of each ultraviolet image, and the determined key point information of the first preview image.

The ultraviolet image may be a grayscale image, or a black-and-white image obtained by performing binarization processing on the grayscale image. In the ultraviolet image, there is a relatively obvious difference in pixel values corresponding to regions with different sunscreen application statuses of the face of the user. The sunscreen application status of the face of the user can be quickly determined based on the ultraviolet image. Therefore, the sunscreen detection result of the face of the user in the first preview image can be quickly determined based on the key point information of each ultraviolet image, and the key point information of the first preview image. This can improve sunscreen detection efficiency and a detection means is simple.

In a possible implementation of the first aspect, the determining a sunscreen detection result of the face in the first preview image based on the determined sunscreen detection result of the face of the user in each ultraviolet image, the determined key point information of each ultraviolet image, and the determined key point information of the first preview image includes: determining, based on the key point information of each ultraviolet image and the key point information of the first preview image, a target ultraviolet image that matches the first preview image in the plurality of ultraviolet images of the face of the user; determining a transformation relationship between the target ultraviolet image and the first preview image based on key point information of the target ultraviolet image and the key point information of the first preview image; and determining the sunscreen detection result of the face of the user in the first preview image based on the transformation relationship and a sunscreen detection result corresponding to the target ultraviolet image.

Both the key point information of the target ultraviolet image and the key point information of the first preview image can be obtained simply and quickly. The transformation relationship between the target ultraviolet image and the first preview image can be accurately determined by using the key point information of the target ultraviolet image and the key point information of the first preview image. Therefore, the sunscreen detection result of the face of the user in the first preview image can be accurately and quickly determined based on the transformation relationship and the sunscreen detection result corresponding to the target ultraviolet image. In this way, a detection process is fast and the detection result is accurate.

In a possible implementation of the first aspect, the determining, based on the key point information of each ultraviolet image and the key point information of the first preview image, a target ultraviolet image that matches the first preview image in the plurality of ultraviolet images of the face of the user includes: separately calculating a face location, a face size, and a face angle in each ultraviolet image based on the key point information of each ultraviolet image, and calculating a face location, a face size, and a face angle in the preview image based on the key point information of the first preview image; and determining, from the plurality of ultraviolet images of the face of the user, an ultraviolet image whose face location, face size, and face angle are close to those in the first preview image as the target ultraviolet image.

In a possible implementation of the first aspect, the electronic device further includes a second screen located on a same side as the first camera, and before the determining a sunscreen detection result of the face in the first preview image, the method further includes: separately calculating a face location, a face size, and a face angle in each ultraviolet image based on the key point information of each ultraviolet image; generating first prompt information based on the calculated face location, face size, and face angle in each ultraviolet image; and displaying the first prompt information by using the second screen, to prompt the user to adjust a face location and/or a face posture.

In a possible implementation of the first aspect, the electronic device further includes a third camera located on the same side as the first camera, and the method further includes: obtaining, in response to the detection instruction, a plurality of second preview images including the face of the user that are captured by using the third camera; determining key point information of each second preview image; separately calculating a face location, a face size, and a face angle in each second preview image based on the key point information of each second preview image; generating second prompt information based on the calculated face location, face size, and face angle in each second preview image; and displaying the second prompt information by using the second screen, to prompt the user to adjust a face location and/or a face posture.

In a possible implementation of the first aspect, the determining a transformation relationship between the target ultraviolet image and the first preview image based on key point information of the target ultraviolet image and the key point information of the first preview image includes: performing triangulation on a key point of the target ultraviolet image based on the key point information of the target ultraviolet image, and performing triangulation on a key point of the first preview image based on the key point information of the first preview image; performing affine transformation between each face triangle obtained by performing triangulation in the target ultraviolet image and a corresponding face triangle in the first preview image, to calculate a transformation relationship between each face triangle in the target ultraviolet image and the corresponding face triangle in the first preview image; and determining a set including the transformation relationship between each face triangle in the target ultraviolet image and the corresponding face triangle in the first preview image as the transformation relationship between the target ultraviolet image and the first preview image.

In a possible implementation of the first aspect, the determining the sunscreen detection result of the face of the user in the first preview image based on the transformation relationship and a sunscreen detection result corresponding to the target ultraviolet image includes: transforming, based on the transformation relationship between the target ultraviolet image and the first preview image, the sunscreen detection result corresponding to the target ultraviolet image, to obtain a transformed sunscreen detection result corresponding to the target ultraviolet image; and determining the transformed sunscreen detection result as the sunscreen detection result of the face of the user in the first preview image.

Both the key point information of the target ultraviolet image and the key point information of the first preview image can be obtained simply and quickly. The transformation relationship between the target ultraviolet image and the first preview image can be accurately determined by using the key point information of the target ultraviolet image and the key point information of the first preview image. Therefore, the sunscreen detection result of the face of the user in the first preview image can be accurately and quickly determined based on the transformation relationship and the sunscreen detection result corresponding to the target ultraviolet image. In this way, a detection process is fast and the detection result is accurate.

In a possible implementation of the first aspect, the determining a sunscreen detection result of the face in the first preview image based on the determined sunscreen detection result of the face of the user in each ultraviolet image, the determined key point information of each ultraviolet image, and the determined key point information of the first preview image includes: performing three-dimensional face reconstruction based on the key point information of each ultraviolet image, to obtain an uncolored three-dimensional face and key point information of the three-dimensional face; coloring the uncolored three-dimensional face based on the sunscreen detection result of the face of the user in each ultraviolet image, to obtain a colored three-dimensional face; and determining the sunscreen detection result of the face of the user in the first preview image based on the colored three-dimensional face, the key point information of the three-dimensional face, and the key point information of the first preview image.

In a possible implementation of the first aspect, the determining the sunscreen detection result of the face of the user in the first preview image based on the colored three-dimensional face, the key point information of the three-dimensional face, and the key point information of the first preview image includes: rotating the colored three-dimensional face in three-dimensional space to obtain three-dimensional faces at a plurality of angles; performing two-dimensional projection on the three-dimensional faces at the plurality of angles to obtain projected faces at a plurality of angles, and determining, based on the key point information of the three-dimensional face, facial key point information corresponding to a projected face at each angle; and selecting, based on the facial key point information corresponding to the projected face at each angle and the key point information of the first preview image, a projected face that matches the first preview image from the projected faces at the plurality of angles, and determining the matched projected face as the sunscreen detection result of the face of the user in the first preview image.

In a possible implementation of the first aspect, the selecting, based on the facial key point information corresponding to the projected face at each angle and the key point information of the first preview image, a projected face that matches the first preview image from the projected faces at the plurality of angles includes: separately calculating a location difference between a facial key point in the projected face at each angle and a corresponding facial key point in the first preview image, and separately performing weighted summation on all location differences in the projected face at each angle; and determining a projected face whose weighted summation result meets a condition as the projected face that matches the first preview image.

In a possible implementation of the first aspect, the method further includes: detecting an instruction for comparing the sunscreen application status of the face of the user with a historical sunscreen detection record; determining, in response to the detection instruction, a plurality of historical ultraviolet images including the face of the user that correspond to the historical sunscreen detection record, key point information of each historical ultraviolet image, and a sunscreen detection result of the face of the user in each historical ultraviolet image; determining a historical sunscreen detection result of the face of the user in the first preview image based on the key point information of each historical ultraviolet image, the sunscreen detection result of the face of the user in each historical ultraviolet image, and the key point information of the first preview image; adjusting the pixel value of the pixel of the facial region of the user in the first preview image based on the determined historical sunscreen detection result of the face of the user in the first preview image, to obtain a to-be-fused image, where pixel values of pixels of sub-regions with different sunscreen application degrees are different in the facial region of the user in the to-be-fused image; and fusing the target image and the to-be-fused image as different layers to obtain a fused image; and displaying the fused image by using the first screen.

The real-time sunscreen detection result of the face of the user in the first preview image and the historical sunscreen detection result are fused for display. This facilitates the user to compare and view the results, to obtain, through analysis, a region in which the user is more likely to miss applying sunscreen or apply less sunscreen.

In a possible implementation of the first aspect, the determining a sunscreen detection result of the face of the user in each ultraviolet image, key point information of each ultraviolet image, and key point information of the first preview image includes: separately performing key point detection on each ultraviolet image and the first preview image by using a deep learning method or a cascaded shape regression method, to obtain the key point information of each ultraviolet image and the key point information of the first preview image; and separately detecting a sunscreen application status of the face of the user in each ultraviolet image by using a preset sunscreen detection model, to obtain the sunscreen detection result of the face of the user in each ultraviolet image.

In a possible implementation of the first aspect, a difference between capture time of each ultraviolet image and capture time of the first preview image is less than a time threshold.

This ensures that there is a relatively small difference between the sunscreen application status of the face of the user in the ultraviolet image and that in the first preview image, and a finally displayed sunscreen detection result is relatively accurate.

In a possible implementation of the first aspect, the first screen is an internal screen, and the second screen is an external screen; or the first screen is a foldable screen, and the second screen is an external screen.

In a possible implementation of the first aspect, an area of the first screen is greater than an area of the second screen. The first screen with the larger area displays the target image, to help improve user experience.

In a possible implementation of the first aspect, the first camera is an ultraviolet camera, the second camera is a front-facing camera, and the third camera is a rear-facing camera.

In a possible implementation of the first aspect, the method further includes: display colors of sub-regions with different sunscreen application degrees are different in the facial region of the user in the target image.

The display colors of the sub-regions with the different sunscreen application degrees are different in the to-be-displayed target image. Therefore, the user can intuitively view sunscreen application statuses in different regions on the face of the user, helping improve user experience.

According to a second aspect, an embodiment of this application provides a computer-readable storage medium. The computer-readable storage medium stores instructions, and when the instructions are executed on an electronic device, the electronic device is enabled to perform the facial feature detection method according to any one of the first aspect and the possible implementations of the first aspect.

According to a third aspect, an embodiment of this application provides a computer program product. The computer program product includes instructions, and when the instructions are executed by one or more processors, the facial feature detection method according to any one of the first aspect and the possible implementations of the first aspect is implemented.

According to a fourth aspect, an embodiment of this application provides an electronic device, including:
a memory, configured to store instructions; and
one or more processors, where when the instructions are executed by the one or more processors, the processor performs the facial feature detection method according to any one of the first aspect and the possible implementations of the first aspect.

### BRIEF DESCRIPTION OF DRAWINGS

To describe the technical solutions in embodiments of this application more clearly, the following briefly describes the accompanying drawings for describing embodiments. It is clear that the accompanying drawings in the following description show merely some embodiments of this application, and a person of ordinary skill in the art may still derive other drawings from these accompanying drawings without creative efforts.
FIG. 1 is an application scenario in which a user uses a mobile phone to view a sunscreen application status of a face according to an embodiment of this application;
FIG. 2A is diagrams of front and background side structures of a mobile phone according to an embodiment of this application;
FIG. 2B to FIG. 2K are diagrams of some UI interfaces according to an embodiment of this application;
FIG. 3 is a diagram of a hardware structure of a mobile phone according to an embodiment of this application;
FIG. 4A and FIG. 4B are a diagram of a UI procedure and an algorithm procedure in an image pre-shooting phase in a sunscreen detection method according to an embodiment of this application;
FIG. 5A is a diagram of a face image with a marked key point according to an embodiment of this application;
FIG. 5B is a diagram of a process of inputting a UV image into a trained sunscreen detection model to detect a sunscreen application status according to an embodiment of this application;
FIG. 6A and FIG. 6B are a diagram of a UI procedure and an algorithm procedure in a real-time viewing phase in a sunscreen detection method according to an embodiment of this application;
FIG. 7A to FIG. 7C are a diagram of a UI procedure and an algorithm procedure in an image pre-shooting phase in another sunscreen detection method according to an embodiment of this application;
FIG. 8A is a diagram of a three-dimensional face according to an embodiment of this application;
FIG. 8B is a diagram of a mask image according to an embodiment of this application;
FIG. 8C is a diagram of a three-dimensional face obtained by coloring a surface patch of the three-dimensional face in FIG. 8A based on the mask image in FIG. 8B according to an embodiment of this application;
FIG. 8D is a diagram of a three-dimensional face obtained by coloring the three-dimensional face in FIG. 8A by using mask images at different angles according to an embodiment of this application;
FIG. 9A and FIG. 9B are a diagram of a UI procedure and an algorithm procedure in a real-time viewing phase in another sunscreen detection method according to an embodiment of this application;
FIG. 10A is a diagram of a rotated three-dimensional face according to an embodiment of this application;
FIG. 10B is a projected image obtained by performing two-dimensional projection on the three-dimensional face shown in FIG. 10A;
FIG. 11 is a schematic flowchart of comparing a historical sunscreen application status with a current sunscreen application status according to an embodiment of this application; and
FIG. 12A to FIG. 12D are diagrams of some UI interfaces according to an embodiment of this application.

### DESCRIPTION OF EMBODIMENTS

Illustrative embodiments of this application include but are not limited to a facial feature detection method, a readable medium, and an electronic device.

The facial feature detection method provided in this application may be applied to some application scenarios in which imaging and viewing are not synchronized in a terminal device, but there is a requirement for real-time display effect. For example, the method is applied to imaging of the face of a user, detection of a sunscreen application status of the face of the user, and detection of a skin status (for example, a wrinkle, a spot, and a pore) of the face of the user, and the user can view a detection result in real time. For ease of description, the following uses detection of the sunscreen application status of the face of the user as an example, to further describe the technical solutions of this application in detail.

Because an intelligent terminal device has advantages such as a small size, a light weight, and portability, the intelligent terminal device is provided with more functions. For example, the intelligent terminal may be configured to detect an application status of a chemical article like sunscreen that is applied on a skin of the user, and then intuitively present a detection result to the user. This helps the user learn of an application region and an application amount of the sunscreen, so that the user can determine whether the sunscreen needs to be reapplied.

The technical solutions of this application may be applied to any intelligent terminal device having a display and a camera, including but not limited to a mobile phone, a tablet computer, a laptop computer, a wearable device, a head mounted display, a portable game console, a portable music player, a reader device, and the like. For ease of description, the following continues to use an example in which the intelligent terminal is a mobile phone 100 for description.

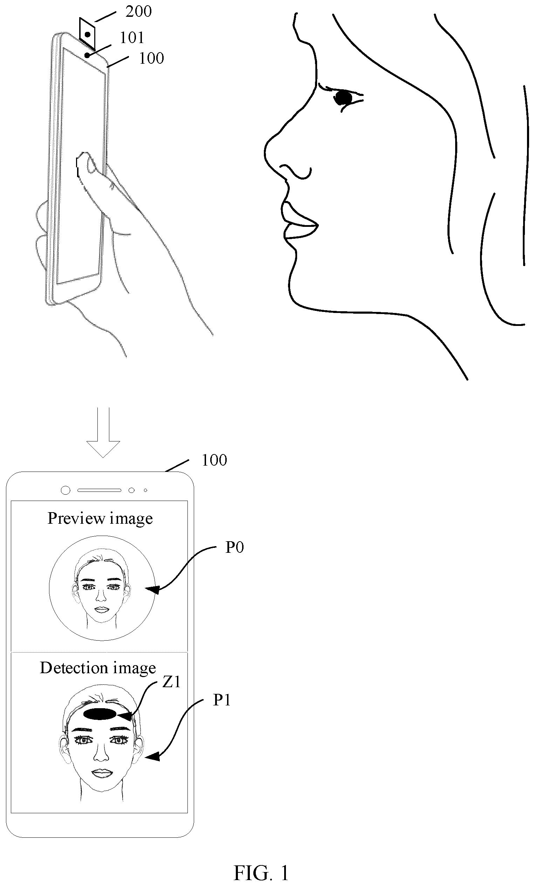

FIG. 1 shows an application scenario in which a user uses a mobile phone 100 to view a sunscreen application status of a face. The mobile phone 100 is externally connected to an ultraviolet (Ultraviolet, UV) accessory 200. For example, the mobile phone 100 is connected to the UV accessory by using a USB interface. The UV accessory 200 is integrated with an ultraviolet supplementary light and an ultraviolet camera. The mobile phone 100 may implement a sunscreen detection function by running an executable program of a sunscreen detection application. After the mobile phone 100 starts the sunscreen detection function, the mobile phone 100 captures a face preview image P0 by using a front-facing camera 101, and displays the face preview image P0 in a form of an RGB image (a color image having three color channels: red, green, and blue), so that the user views the preview image in real time to adjust a face posture. The mobile phone 100 captures a face image of the user by using the external UV accessory 200, and directly presents, to the user as a detection image, the face image (namely, a grayscale image) captured by using the external UV accessory 200. A skin region in which sunscreen is applied, for example, a region Z1 in the detection image P1 displayed by the mobile phone 100 in FIG. 1, absorbs ultraviolet, and shows a relatively dark color, for example, black. However, a skin region in which no sunscreen is applied or less sunscreen is applied does not absorb the ultraviolet, and shows a relatively light color, for example, white or gray, in the image. Therefore, the user learns of the sunscreen application status of the face by viewing the detection image P1.

However, in the embodiment shown in FIG. 1, the mobile phone 100 directly presents, to the user as the detection image, the grayscale image captured by using the external UV accessory 200. Therefore, the user learns of the sunscreen application status of the face by viewing the grayscale image. However, the color of the skin region in which no sunscreen is applied is relatively dark in the grayscale image presented in this presentation manner. This causes unpleasant visual experience of the image to the user, resulting in poor user experience. In addition, the user needs to carry the UV accessory with the user, causing inconvenience to the user.

To improve user experience of performing sunscreen detection by using the mobile phone 100, in some embodiments, a UV accessory including an ultraviolet supplementary light and an ultraviolet camera may be integrated into the mobile phone 100, and a sunscreen detection result is displayed in real time as a color image. In this way, when using the mobile phone 100 to perform sunscreen detection, the user does not need to externally connect the UV accessory to the mobile phone 100, and the user can view the color sunscreen detection result in real time. However, to avoid affecting a screen-to-body ratio of the mobile phone 100, the UV accessory may be disposed on a back side of the mobile phone 100 (namely, an opposite side of a home screen of the mobile phone 100). In addition, to ensure real-time display of the sunscreen detection result, a relatively small screen (briefly referred to as an external screen) may be disposed on the background of the mobile phone 100. When performing sunscreen application detection by using the mobile phone 100, the user may preview the image and view the detection result by using the external screen.

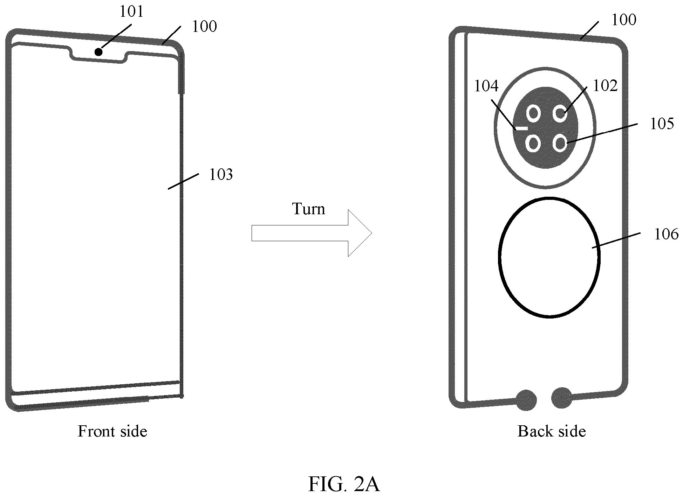

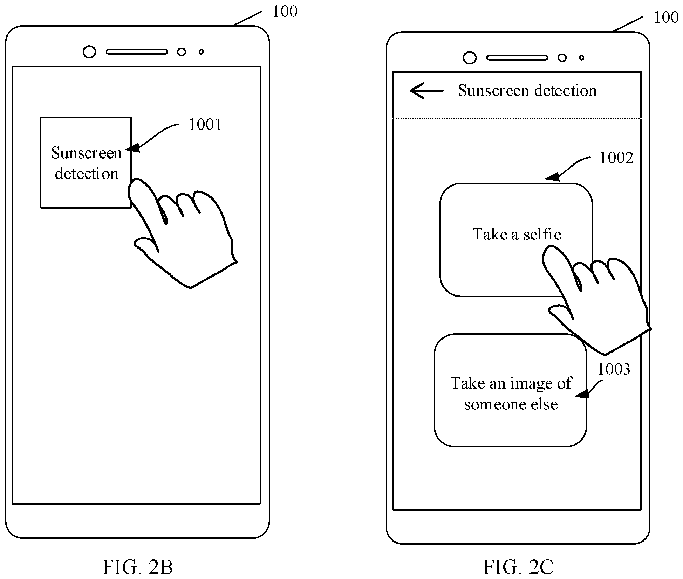

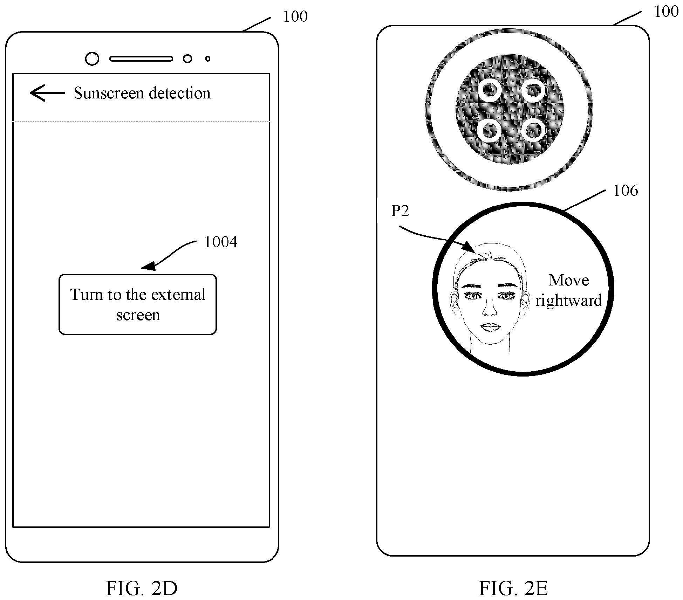

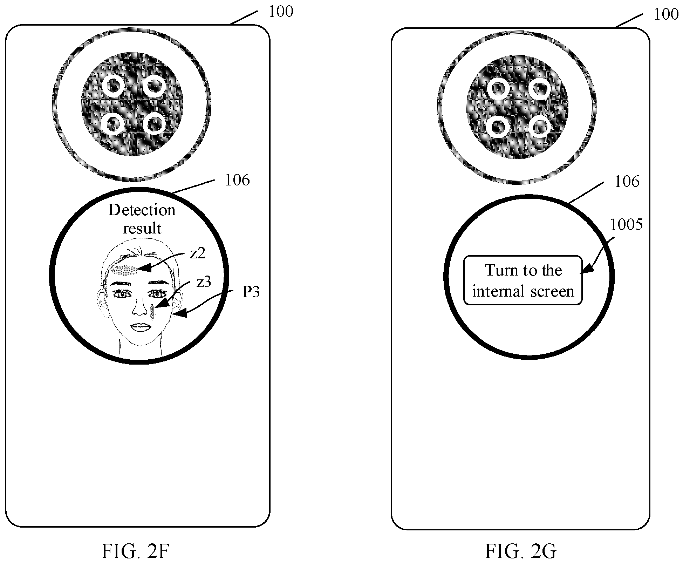

For example, in diagrams of front and back side structures of a mobile phone 100 shown in FIG. 2A, a large screen (namely, an internal screen) 103 and a front-facing camera 101 are disposed on a front side of the mobile phone 100, and an ultraviolet supplementary light 104, an ultraviolet camera 102, a rear-facing camera 105, and an external screen 106 are disposed on a back side of the mobile phone 100. A user first taps a sunscreen detection control 1001 shown in FIG. 2B, to enable the mobile phone 100 to open a sunscreen detection page shown in FIG. 2C, where the sunscreen detection page includes a "Take a selfie" control 1002 and a "Take an image of someone else" control 1003. When the user taps the "Take a selfie" control 1002, an interface shown in FIG. 2D is displayed, and "Turn to the external screen" prompt information 1004 pops up, to prompt the user to turn the mobile phone 100. The user turns the mobile phone 100, so that the external screen 106 of the mobile phone 100 faces the face of the user, a rear-facing preview image of the face is captured by using the rear-facing camera 105, the rear-facing preview picture P2 shown in FIG. 2E and related prompt information used to prompt the user to adjust a face posture are displayed on the external screen 106 in a form of an RGB color image. When the mobile phone 100 determines that the user adjusts the face to a central location of a preview picture, the mobile phone 100 captures, by using the rear-facing camera 105, an RGB rear-facing preview image located in the central location of the preview picture, and captures, by using the ultraviolet camera 102, a grayscale image (briefly referred to as a UV image) of the face of the user. Then, a sunscreen application detection result of the face of the user is obtained by using a specified sunscreen detection algorithm based on the UV image, for example, a region without sunscreen application and a region with insufficient sunscreen application are detected. The detection result is converted into marks of different colors, and then the marks of the different colors are added to the RGB rear-facing preview image, and a picture P3 shown in FIG. 2F is presented to the user. For example, as shown in FIG. 2F, the region Z2 with insufficient sunscreen application is displayed by using a color 1 in a red-green-blue (RGB) color wheel, and the region Z3 without sunscreen application is displayed by using a color 2 in the red-green-blue (RGB) color wheel.

However, in the embodiment shown in FIG. 2A to FIG. 2F, when the user detects a sunscreen application status of the face of the user by using the mobile phone 100, because the ultraviolet camera 102 is disposed on an external screen side of the mobile phone 100, to ensure real-time display of the sunscreen detection result, the mobile phone 100 can display a color detection result only by using the external screen 106. Due to a relatively small size of the external screen 106, the marks in the result image with the marks of the different colors displayed on the external screen 106 are unclear, consequently resulting in poor user experience.

The sunscreen detection result is displayed on the internal screen of the mobile phone 100 in a form of an RGB image on the premise that the mobile phone 100 can display the sunscreen detection result in real time, so that display of the detection result is maximized, facilitating the user to view the detection result.

This application provides a sunscreen detection method. The mobile phone 100 first shoots UV image of the face of the user at each angle by using the rear-facing ultraviolet camera 102, to obtain a UV image sequence. Key point detection is performed on each UV image, to obtain key point information of each UV image. Key points of the UV image mean key pixels that are used to represent key facial features such as five facial features (including the eyebrows, the eye, the nose, and the mouth) and a facial contour of the user in the UV image and that are determined by using a key point detection method like a deep learning method and a cascaded shape regression method.

Then, sunscreen application status detection is performed on each UV image in the UV image sequence, to obtain a sunscreen detection result corresponding to each UV image. For example, each UV image in the UV image sequence is input into a preset sunscreen detection model, to obtain a mask image (namely, a sunscreen detection result) corresponding to each UV image. The mask image corresponding to each UV image is a grayscale image or a black-and-white image, and pixels in each mask image are in a one-to-one correspondence with pixels in the corresponding UV image. In each mask image, color blocks corresponding to regions with different sunscreen application statuses in the corresponding UV image are displayed. Colors of the color blocks may be black, white, or gray. For example, a region Z0 in a mask image corresponding to a specific UV image absorbs ultraviolet, and shows a relatively dark color, for example, black. However, a skin region in which no sunscreen is applied or less sunscreen is applied does not absorb the ultraviolet, and shows a relatively light color, for example, white or gray, in the image.

Then, the front-facing camera 101 shoots a front-facing preview image of the face of the user. The front-facing preview image is an RGB image that includes the face of the user and that can be viewed in real time by the user by using the internal screen (a screen with a relatively large area) of the mobile phone 100. In addition, key point detection is performed on the front-facing preview image, to obtain key point information of the front-facing preview image.

Then, a sunscreen application status of the face of the user existing when the front-facing camera shoots the front-facing preview image is determined based on the obtained sunscreen detection result corresponding to each UV image, the key point information of each UV image, and the key point information of the front-facing preview image. Therefore, pixel values of a plurality of pixels in a facial region of the front-facing preview image are adjusted based on the determined sunscreen application status of the face of the user corresponding to the front-facing preview image, to obtain a target image. For example, if sunscreen application of a forehead region of the user is insufficient, pixel values of the forehead region in the front-facing preview image are adjusted, so that a color of the forehead region in the front-facing preview image is adjusted to purple. Finally, the target image is displayed by using the internal screen (the screen with the relatively large area).

Because the target image is an RGB image and is obtained based on the front-facing first preview image shot in real time, final display of the target image on the internal screen can meet a real-time requirement of the user for sunscreen detection, the sunscreen detection result presented to the user is more beautiful, and display of the detection result may be further maximized. This facilitates the user to view the detection result, and improves user experience.

For example, in some embodiments, the mobile phone 100 divides an entire sunscreen detection process into two phases: an image pre-shooting phase and a real-time viewing phase. In the image pre-shooting phase, the mobile phone 100 stores the obtained UV image sequence, the mask image corresponding to each UV image, and the key point information of each UV image. In the real-time viewing phase, the mobile phone 100 performs key point detection on the front-facing preview image captured by using the front-facing camera 101, to obtain the key point information of the front-facing preview image. Then the mobile phone determines, from the UV image sequence based on the key point information of the front-facing preview image and the key point information of each UV image, a UV image that matches the front-facing preview image, determines a transformation relationship T between the matched UV image and the front-facing preview image, and transforms, based on the transformation relationship T, a mask image corresponding to the matched UV image, to obtain a to-be-fused mask image corresponding to the front-facing preview image. In this case, the to-be-fused mask image and the front-facing preview image are fused and then displayed by using the internal screen 103.

For another example, in some other embodiments, in the image pre-shooting phase, the mobile phone 100 performs three-dimensional face reconstruction based on the obtained UV image sequence and the key point information of each UV image, to obtain a reconstructed three-dimensional face, colors the three-dimensional face by using the obtained mask image corresponding to each UV image, to obtain a colored three-dimensional face, and stores related data of the three-dimensional face. In the real-time viewing phase, the mobile phone 100 performs key point detection on the front-facing preview image captured by using the front-facing camera 101, to obtain the key point information of the front-facing preview image. Then the mobile phone rotates the colored three-dimensional face by different angles and performs two-dimensional projection to obtain projected images at different angles, determines, from the projected images based on the key point information of the front-facing preview image and the key point information of the projected images, a projected image that matches the front-facing preview image, and use the matched projected image as a to-be-fused mask image corresponding to the front-facing preview image. In this case, the to-be-fused mask image and the front-facing preview image are fused and then displayed by using the internal screen 103.

For example, in the image pre-shooting phase, the user taps the sunscreen detection control 1001 shown in FIG. 2B (the control may be a control in a sunscreen detection application, or a control in another application integrated with a sunscreen detection function), to enable the mobile phone 100 to open the sunscreen detection page shown in FIG. 2C, and then the user taps the "Take a selfie" control 1002, to enter the interface shown in FIG. 2D. The "Turn to the external screen" prompt information 1004 pops up, to prompt the user to turn the mobile phone 100. The user turns the mobile phone 100, so that the external screen 106 of the mobile phone 100 faces the face of the user, a rear-facing preview image of the face is captured by using the rear-facing camera 105, the rear-facing preview picture P2 shown in FIG. 2E and related prompt information used to prompt the user to adjust a face posture are displayed on the external screen 106 in a form of an RGB color image. When determining that the user adjusts the face to a central location of the rear-facing preview picture, the mobile phone 100 captures a UV image of the face of the user at each angle by using the ultraviolet camera 102. After the mobile phone 100 captures the UV images (the UV image sequence) of the face of the user at the various angles, and obtains, through calculation, mask image corresponding to each UV image and key point information of each UV image, an interface shown in FIG. 2G is displayed. "Turn to the internal screen" prompt information 1005 pops up. Alternatively, the user is prompted, by using a voice, to turn the mobile phone 100 again, so that the face of the user faces the front-facing camera 101 of the mobile phone 100, and the mobile phone enters the real-time viewing phase.

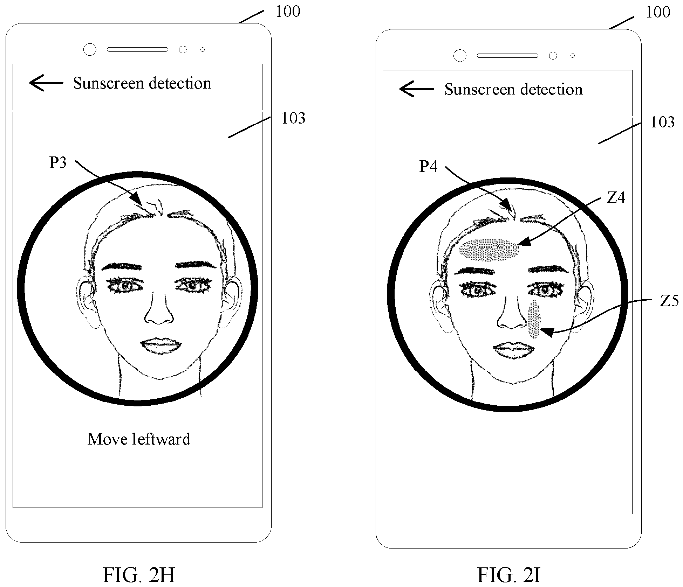

In the real-time viewing phase, the front-facing preview image of the face is captured by using the front-facing camera 101 of the mobile phone 100, and the front-facing preview picture P3 shown in FIG. 2H and related prompt information used to prompt the user to adjust the face posture are displayed on the internal screen 103 in a form of an RGB color image. When the mobile phone 100 determines that the face of the user is in an appropriate location, for example, when the mobile phone 100 determines that the user adjusts the face to the central location of the front-facing preview picture, the mobile phone 100 captures and displays a front-facing preview image P4 shown in FIG. 2I. In addition, the to-be-fused mask image corresponding to the front-facing preview image is determined based on the UV image sequence, the mask image corresponding to each UV image, and the key point information of each UV image that are obtained through calculation in the image pre-shooting phase. After the to-be-fused mask image and the front-facing preview image P4 are fused, regions Z4 and Z5 in which the sunscreen needs to be reapplied are displayed in colors on the front-facing preview image P4 shown in FIG. 2I, and presented to the user.

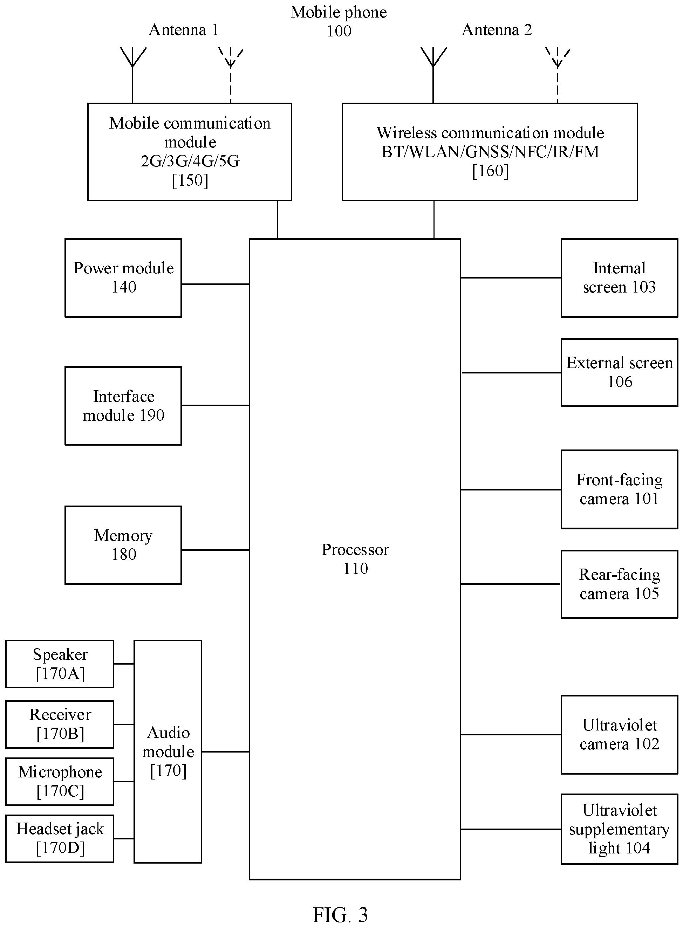

The following describes in detail a hardware structure of a mobile phone 100 provided in an embodiment of this application with reference to FIG. 3. The mobile phone 100 executes an executable program to implement a sunscreen detection method provided in an embodiment of this application. Specifically, as shown in FIG. 3, the mobile phone 100 may include a processor 110, a power module 140, a memory 180, a mobile communication module 150, a wireless communication module 160, an interface module 190, an audio module 170, an internal screen 103, an external screen 106, a front-facing camera 101, a rear-facing camera 105, an ultraviolet camera 102, an ultraviolet supplementary light 104, and the like.

The processor 110 may include one or more processing units, for example, may include a processing module or a processing circuit of a central processing unit (Central Processing Unit, CPU), a graphics processing unit (Graphics Processing Unit, GPU), a neural-network processing unit (Neural-network Processing Unit, NPU), a digital signal processor (Digital Signal Processor, DSP), a microprocessor (Micro-programmed Control Unit, MCU), an artificial intelligence (Artificial Intelligence, AI) processor, or a programmable logic device (Field Programmable Gate Array, FPGA). Different processing units may be independent components, or may be integrated into one or more processors. For example, in some instances of this application, the processor 110 may be configured to perform key point detection and sunscreen detection on a UV image captured by using the ultraviolet camera 102. In some embodiments, the processor 110 may be configured to perform face detection and key point detection on a front-facing preview image captured by using the front-facing camera 101. In some embodiments, the processor 110 may be configured to: perform face alignment on the UV image and the front-facing preview image, determine a transformation relationship between the UV image and the front-facing preview image, and perform alignment, based on the transformation relationship, on a key point corresponding to a sunscreen detection result of the UV image to a key point corresponding to the front-facing preview image.

The memory 180 may be configured to store data, a software program, and a module; and may be a volatile memory (Volatile Memory), like a random access memory (Random-Access Memory, RAM), may be a non-volatile memory (Non-Volatile Memory), like a read-only memory (Read-Only Memory, ROM), a flash memory (Flash Memory), a hard disk drive (Hard Disk Drive, HDD), or a solid-state drive (Solid-State Drive, SSD), may be a combination of the foregoing types of memories, or may be a removable storage medium like a secure digital (Secure Digital, SD) storage card. Specifically, the memory 180 may include a program storage region (not shown in the figure) and a data storage region (not shown in the figure). The program storage region may store program code, and the program code is used to enable the processor 110 to execute the program code to perform the sunscreen detection method provided in an embodiment of this application. In this embodiment of this application, the data storage region may be used to store a facial key point and the sunscreen detection result of the UV image that are obtained by the processor 110 by detecting the UV image, and a facial key point corresponding to the sunscreen detection result of the UV image. In this embodiment of this application, the data storage region may be further used to store the facial key point obtained by the processor 110 by detecting the front-facing preview image. In this embodiment of this application, the data storage region may be further used to store a mapping relationship between the UV image and the front-facing preview image that is determined by the processor 110.

The power module 140 may include a power supply, a power management component, and the like. The power supply may be a battery. The power management component is configured to manage charging of the power supply and power supply of the power supply to another module. The charging management module is configured to receive charging input from a charger. The power management module is configured to connect to the power supply, the charging management module and the processor 110.

The mobile communication module 150 may include but is not limited to an antenna, a power amplifier, a filter, a low noise amplifier (Low Noise Amplifier, LNA), and the like. The mobile communication module 150 may provide a wireless communication solution that is applied to the mobile phone 100 and that includes 2G/3G/4G/5G or the like. The mobile communication module 150 may receive an electromagnetic wave through the antenna, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may include an antenna, and receive and send an electromagnetic wave through the antenna. The wireless communication module 160 may provide a wireless communication solution that is applied to the mobile phone 100 and that includes a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, an infrared (Infrared, IR) technology, and the like. The mobile phone 100 may communicate with a network and another device by using a wireless communication technology.

In some embodiments, the mobile communication module 150 and the wireless communication module 160 of the mobile phone 100 may alternatively be located in a same module.

The front-facing camera 101 and the rear-facing camera 105 are respectively configured to shoot the front-facing preview image and a rear-facing preview image. The ultraviolet camera 102 is configured to capture the UV image. The ultraviolet supplementary light 104 is configured to perform ultraviolet supplement when the ultraviolet camera 102 is configured to capture the UV image.

The internal screen 103 is usually a large screen of the mobile phone 100, and may be configured to display, in real time, the front-facing preview image captured by using the front-facing camera 101, and may be further configured to display a front-facing preview image that includes the sunscreen detection result. The external screen 106 is usually a screen with a relatively small area in the mobile phone 100, and is usually not on the same side as the internal screen 103 of the mobile phone 100. The external screen 106 may be configured to display, in real time, the rear-facing preview image captured by using the rear-facing camera 105.

The audio module 170 may convert digital audio information into an analog audio signal for output, or convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110. In some embodiments, the audio module 170 may include a speaker 170A, a receiver 170B, a microphone 170C, and a headset interface 170D. For example, in some embodiments of this application, the mobile phone 100 may prompt, by using a voice based on the speaker 170A, a user to adjust a face posture and a face location, so that face images of the user at various angles can be captured, and all five facial features of the user can be shot.

The interface module 190 includes an external memory interface, a universal serial bus (Universal Serial Bus, USB) interface, a subscriber identification module (Subscriber Identification Module, SIM) card interface, and the like. The external memory interface may be configured to connect to an external memory card, for example, a micro SD card, to expand a storage capability of the mobile phone 100. The external memory card communicates with the processor 110 through the external memory interface, to implement a data storage function. The universal serial bus interface is configured for communication between the mobile phone 100 and another mobile phone. The subscriber identification module card interface is configured to communicate with a SIM card installed in the mobile phone 100, for example, is configured to read a phone number stored in the SIM card, or write a phone number into the SIM card.

In some embodiments, the mobile phone 100 further includes a button, a motor, an indicator, and the like. The buttons may include a volume button, a power-on/power-off button, and the like. The motor is configured to enable the mobile phone 100 to generate vibration effect. The indicator may include a laser indicator, a radio frequency indicator, an LED indicator, and the like.

It may be understood that the hardware structure shown in FIG. 3 does not constitute a specific limitation on the mobile phone 100. In some other embodiments of this application, the mobile phone 100 may include more or fewer components than those shown in FIG. 3, some components may be combined, some components may be split, or different component arrangements may be used.

The following continues to use the mobile phone 100 as an example to describe in detail a specific process in which the mobile phone 100 performs sunscreen detection provided in an embodiment of this application. As described above, in this embodiment of this application, entire sunscreen detection is divided into an image pre-shooting phase and a real-time viewing phase. The following separately describes in detail specific processes of the image pre-shooting phase and the real-time viewing phase.

### Image pre-shooting phase

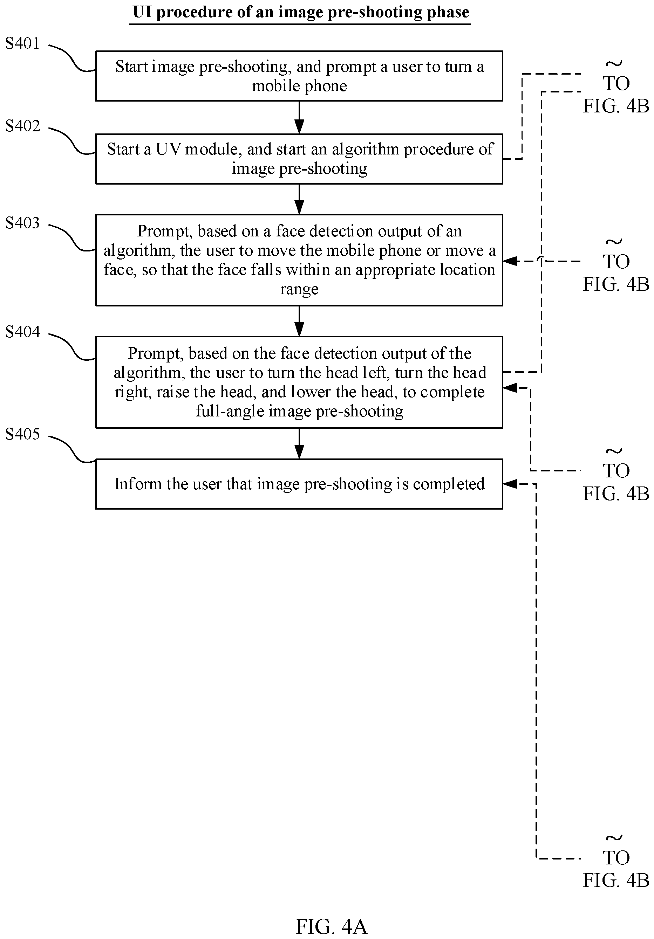

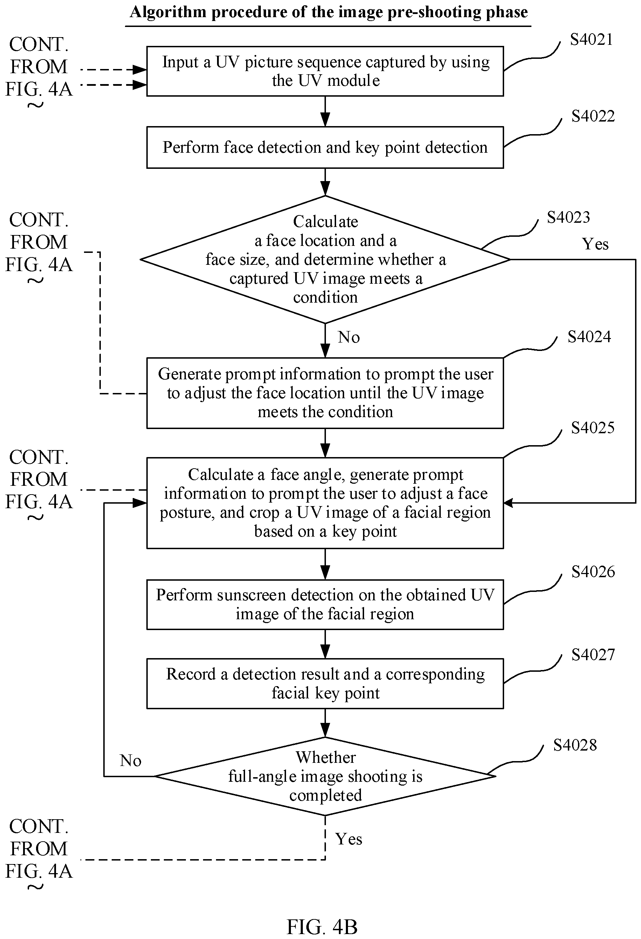

A processing process of an image pre-shooting phase shown in FIG. 4A and FIG. 4B includes a UI procedure of the image pre-shooting phase and an algorithm procedure of the image pre-shooting phase. Steps in a flowchart shown in FIG. 4A and FIG. 4B may be performed by the mobile phone 100 shown in FIG. 3. First, the UI procedure of the image pre-shooting phase shown in FIG. 4A is described. Specifically, refer to FIG. 4A. The UI procedure of the image pre-shooting phase in the sunscreen detection method provided in this embodiment of this application includes the following steps.

S401: Start image pre-shooting, and prompt a user to turn the mobile phone 100. The starting image pre-shooting herein means starting an image pre-shooting function of the mobile phone 100. For example, in some embodiments, when a user uses an internal screen 103 of the mobile phone 100, the mobile phone 100 displays, by using the internal screen 103, the sunscreen detection control 1001 shown in FIG. 2B. The user taps the sunscreen detection control 1001 shown in FIG. 2B, to enable the mobile phone 100 to open the sunscreen detection page shown in FIG. 2C. Then, the user taps a "Take a selfie" control 1002 to start the image pre-shooting function of the mobile phone 100, so that the interface shown in FIG. 2D is displayed on the mobile phone 100. "Turn to the external screen" prompt information 1004 pops up, to prompt the user to turn the mobile phone 100. In some embodiments, the mobile phone 100 may alternatively prompt, by using a voice, the user to turn the mobile phone 100. How the mobile phone 100 presents the prompt information to the user is not limited in this application. In this case, a rear-facing camera 105, an ultraviolet camera 102, an ultraviolet supplementary light 104, and an external screen 106 of the mobile phone 100 face the face of the user, so that the rear-facing camera 105 and/or the ultraviolet camera 102 can be configured to shoot an image of the face with sunscreen application of the user, and the user can view content displayed on the external screen 106.

S402: Start a UV module, and start the algorithm procedure of image pre-shooting.

In some embodiments, the mobile phone 100 detects that the user taps the "Take a selfie" control 1002 to start the image pre-shooting function, and after detecting that the user turns the mobile phone 100, the mobile phone starts the UV module (not shown in the figure) including the ultraviolet camera 102 and the ultraviolet supplementary light 104. In some embodiments, the mobile phone 100 may alternatively start the UV module after prompting the user to turn the mobile phone 100 to a side of the external screen 106 and detecting, by using a sensor, that the mobile phone 100 is turned.

In some embodiments, the mobile phone 100 may further display the sunscreen detection control 1001 by using the external screen 106, and the user taps the sunscreen detection control 1001, to enable the mobile phone 100 to open the sunscreen detection page. Then, the user taps the "Take a selfie" control 1002, and the mobile phone 100 starts the UV module, to start capturing a UV image.

In some embodiments, after the mobile phone 100 starts the UV module, the mobile phone 100 starts continuously capturing a plurality of frames of UV images of the face of the user by using the ultraviolet camera 102, to obtain a UV image sequence, and starts the algorithm procedure of image pre-shooting, to process the captured UV image sequence and generate prompt information to prompt the user to adjust a face posture. In addition, after it is determined that the user appropriately adjusts the face posture, a UV image of the face of the user at each angle is captured by using the ultraviolet camera 102, and sunscreen detection is performed based on the captured UV image of the face of the user at each angle, to obtain a sunscreen detection result and a corresponding facial key point.

In some embodiments, the mobile phone 100 may further start the rear-facing camera 105 when starting the UV module (not shown in the figure) including the ultraviolet camera 102 and the ultraviolet supplementary light 104. A rear-facing preview image of the face is captured by using the rear-facing camera 105. The rear-facing preview picture P2 shown in FIG. 2E and related prompt information that is generated based on a result of processing the rear-facing preview image by using an image pre-shooting algorithm and that is used to prompt the user to adjust the face posture are displayed on the external screen 106 in a form of an RGB color image. In addition, after it is determined that the user appropriately adjusts the face posture, a UV image of the face of the user at each angle is captured by using the ultraviolet camera 102, and sunscreen detection is performed based on the captured UV image of the face of the user at each angle, to obtain a sunscreen detection result and a corresponding facial key point. The rear-facing preview image captured by using the rear-facing camera 105 is a color image, and the color image includes more features than the UV image. Therefore, the prompt information generated based on the rear-facing preview image captured by using the rear-facing camera 105 is more accurate, so that the user can quickly adjust the posture, and sunscreen detection efficiency is improved.

A specific algorithm procedure of image pre-shooting is described in detail below with reference to S4021 to S4029. Details are not described herein.

S403: Prompt, based on a face detection output of the algorithm, the user to move the mobile phone 100 or move the face, so that the face falls within an appropriate location range.

For example, in some embodiments, the mobile phone 100 continuously captures a plurality of frames of UV images of the face of the user by using the ultraviolet camera 102, to obtain a UV image sequence, processes the captured UV image sequence according to the image pre-shooting algorithm, and prompts, by using a text prompt shown in FIG. 2H, the user to move the mobile phone 100 or move the face based on a processing result, so that the face falls within the appropriate location range. For example, the face is in a central location of a field of view of a lens of the ultraviolet camera 102. In some embodiments, the mobile phone 100 may alternatively prompt, by using a voice, the user to move the mobile phone 100 or move the face.

For another example, in some embodiments, the mobile phone 100 captures a rear-facing preview image sequence of the face by using the rear-facing camera 105, processes the captured rear-facing preview image sequence according to the image pre-shooting algorithm, and prompts, by using a UI or a voice based on a processing result, the user to move the mobile phone 100 or move the face, so that the face falls within the appropriate location range. For example, the face is in a central location of a field of view of a lens of the rear-facing camera 105.

S404: Prompt, based on the face detection output of the algorithm, the user to turn the head left, turn the head right, raise the head, and lower the head, to complete full-angle image pre-shooting. In this way, the mobile phone 100 can complete image shooting of UV images of the face of the user at various angles.

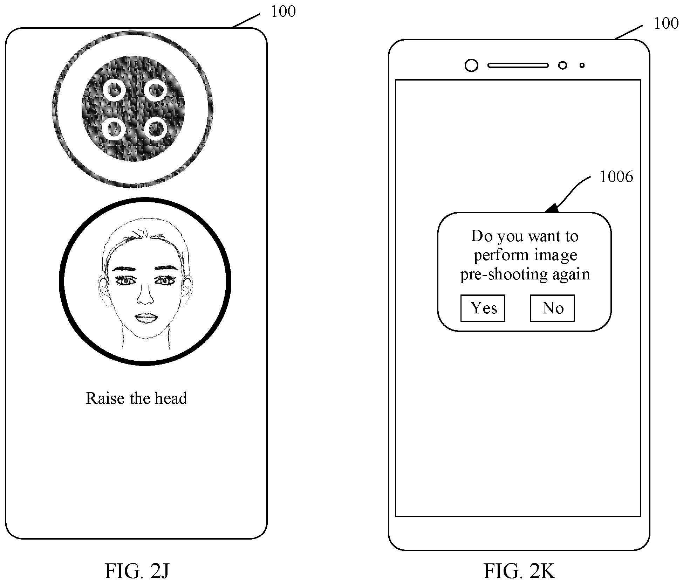

For example, in some embodiments, after determining that the user adjusts the face to the appropriate location range, the mobile phone 100 captures a frontal UV image of the face of the user, and then prompts, by using a UI interface shown in FIG. 2J or by using a voice, the user to turn the face left, turn the face right, raise the head, and lower the head, to capture UV images of the face of the user at different angles. In this case, the mobile phone 100 performs sunscreen detection on the UV images of the face of the user at the different angles according to the image pre-shooting algorithm, to obtain sunscreen detection results corresponding to the UV images at the different angles, and facial key points in the UV images at the different angles corresponding to the sunscreen detection results of the UV images at the different angles.

S405: Inform the user that image pre-shooting is completed.

In some embodiments, after the mobile phone 100 captures the UV image of the face of the user, for example, completes image shooting of the UV image of the face of the user at each angle, the interface shown in FIG. 2G is displayed, and "Turn to the internal screen" prompt information 1005 pops up, to inform the user that image pre-shooting is completed. Then the user turns the mobile phone 100 again, so that the face of the user faces a front-facing camera 101 of the mobile phone 100, and the mobile phone enters a real-time viewing phase.

In some embodiments, after the mobile phone 100 captures the UV image of the face of the user, for example, completes image shooting of the UV image of the face of the user at each angle, the mobile phone 100 may further inform, by using a voice, the user that image pre-shooting is completed, to prompt the user to turn the mobile phone 100 again, so that the internal screen 103 of the mobile phone 100 faces the face of the user.

The following describes in detail a specific processing process of the image pre-shooting algorithm after the mobile phone 100 starts the algorithm procedure of image pre-shooting in S402.

It may be understood that an execution sequence of step S401 to step S405 is merely an example. In some other embodiments, another execution sequence may be used, or some steps may be split or combined. This is not limited herein.

Continue to refer to FIG. 4B. The algorithm procedure of the image pre-shooting phase corresponding to S402 in the sunscreen detection method provided in this embodiment of this application includes the following steps.

S4021: Input the UV image sequence captured by using the UV module.

Because the UV module includes the ultraviolet camera 102 and the ultraviolet supplementary light 104, the UV image sequence captured by using the UV module is also the image sequence captured by using the ultraviolet camera 102.

In some embodiments, the mobile phone 100 may further capture a rear-facing preview image sequence of the face by using the rear-facing camera 105, and input the sequence into a processor 110 of the mobile phone 100.

S4022: Perform face detection and key point detection.

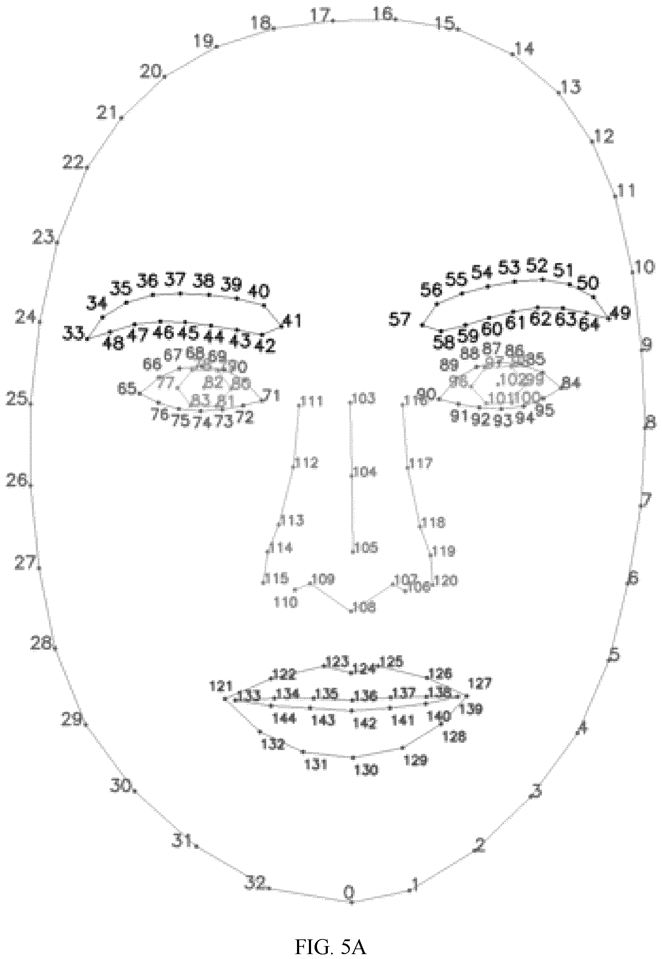

For example, the mobile phone 100 performs face detection on the input UV image sequence or rear-facing preview image sequence by using the processor 110 based on a face detection model, and then performs key point detection on key regions such as five facial features (including the eyebrows, the eyes, the nose, and the mouth) and a facial contour in a facial region based on the detected facial region. Facial key point detection means detecting a key region location of the face by using a key point detection method like a deep learning method or a cascaded shape regression method in a specified face image and marking key points in the key region. For example, key points in five facial features and a face contour in the face image shown in FIG. 5A are marked by using one of marking manners, such as 68 points, 98 points, 106 points, and 186 points.

For another example, after determining that a face location and a face distance are appropriate, the mobile phone 100 captures the UV images of the face of the user at the different angles by using the ultraviolet camera 102. In this case, the mobile phone 100 needs to perform face detection and key point detection on the UV images of the face of the user at the different angles.

It should be noted that after the ultraviolet camera 102 is started, the ultraviolet camera 102 continuously captures the UV images of the face of the user. Therefore, in this embodiment of this application, face detection and key point detection are performed on each frame of UV image captured by using the ultraviolet camera 102.

S4023: Calculate the face location and a face size, and determine whether the captured UV image meets a condition. If yes, it indicates that the captured UV image meets the condition, and the face location and the face distance fall within an appropriate range, and S4025 is performed; if no, it indicates that the captured UV image does not meet the condition, for example, the face is far away from the mobile phone 100, and a facial region in the shot UV image is small, or a part of the facial region is not shot, S4024 is performed, and corresponding prompt information is generated to prompt the user to adjust the face location until the face falls within the appropriate location range.

For example, the mobile phone 100 performs face detection and key point detection on the UV image sequence or the rear-facing preview image sequence, to obtain a face detection result and a key point detection result, and determines a distance between a geometric center of the face in the UV image sequence or the rear-facing preview image sequence and a geometric center of a picture in the image, and a ratio of a face size to an image size based on the face detection result and the key point detection result. In this case, the mobile phone 100 may indicate, by using a UI interface or outputting a voice prompt based on whether the distance between the geometric center of the face in the UV image sequence or the rear-facing preview image sequence and the geometric center of the picture in the image is less than a preset distance threshold and whether the ratio of the face size to the image size falls within a preset range, the user to move the mobile phone 100 or move the face of the user, until the face falls within an appropriate location range.

S4024: Generate prompt information to prompt the user to adjust the face location until the UV image meets the condition.

To be specific, when determining that the captured UV image does not meet the condition, the mobile phone 100 may generate the prompt information, for example, moving leftward, moving rightward, moving closer, or moving farther, and prompt, in a form of a text, a voice, or the like, the user to move the mobile phone 100 or move the face until the face falls within the appropriate location range. It is not difficult to understand that if a size and a distance of the captured UV image are appropriate, a detected sunscreen application status is relatively accurate.

S4025: Calculate a face angle, generate prompt information to prompt the user to adjust a face posture, and crop a UV image of the facial region based on the key point.

To be specific, after the mobile phone 100 determines the face location and the face distance are adjusted to the appropriate location range, the mobile phone 100 calculates, based on a plurality of facial key points marked in the embodiment shown in FIG. 5A, a feature representing the face angle. The facial key points shown in FIG. 5A are used as an example: a feature representing a left angle and a right angle: LR=(p90.x-p103.x)/(p103.x-p71.x), and a feature representing a pitch angle: RB=(p105.x-p103.x)/(p130.x-p108.x). p90 is a leftmost key point of the right eye in the face shown in FIG. 5A, p103 is a central key point of the nose bridge, p71 is a rightmost key point of the left eye, p105 is a key point of the nose tip, p130 is a central key point of a lower edge of the lip, p108 is a central key point of a bottom of the nose, and x and y respectively represent horizontal and vertical coordinates of the key point. The mobile phone 100 indicates, by using the UI prompt or the voice prompt, the user to complete an action like turning the head left, turning the head right, raising the head, and lowering the head, so that the face images of the user at the different angles are captured by using the ultraviolet camera 102.

The facial region in the UV image at each angle may be cropped based on the key point in the UV image, to obtain a UV image of the facial region corresponding to the UV image at each angle. For example, based on the plurality of key points of the face image marked in FIG. 5A, UV images of the face of the user at the different angles that are captured by the mobile phone 100 by using the ultraviolet camera 102 when the user falls within the appropriate location range are cropped, to obtain the UV image of the facial region corresponding to the UV image of the face at each angle.

S4026: Perform sunscreen detection on the obtained UV image of the facial region.

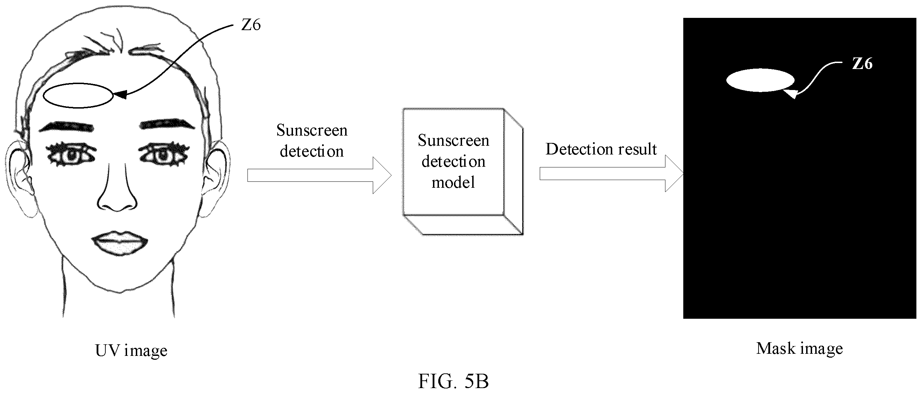

In some embodiments, the mobile phone 100 inputs the UV image of the facial region corresponding to the UV image of the face at each angle obtained in S4026 into a trained sunscreen detection model (for example, a U-Net model), to perform sunscreen detection to obtain a binary black-and-white image (the image is briefly referred to as a mask image) of a sunscreen application region of the face of the user. The sunscreen detection model is obtained by training a large quantity of UV images and corresponding binary black-and-white images. For example, as shown in FIG. 5B, the UV image is input into the trained sunscreen detection model to perform sunscreen application status detection, to obtain a black-and-white mask image shown in FIG. 5B. In the mask image, a region with sufficient application is a black region, and a region with insufficient application is a white region z6.

In some embodiments, to make a detection result more precise, the sunscreen detection model may alternatively be obtained by training a large quantity of UV images and grayscale images that represent sunscreen application statuses in the UV images. For example, if a to-be-detected UV image is input into the sunscreen detection model, the model outputs a corresponding grayscale image. In the grayscale image, a black region is a region with sufficient sunscreen application, a white region is a region with no sunscreen application, and a gray region is a region with insufficient sunscreen application.

S4027: Record a detection result and a corresponding facial key point.

For example, the mobile phone 100 records (namely, stores) the mask image corresponding to the UV image of the face of the user at each angle and the facial key point of the UV image of the face of the user at each angle that are obtained in S4027.

In some embodiments, the mobile phone 100 may further calculate a face location, a face size, and a face angle for the UV image of the face at each angle obtained in S4026, and store face location, size, and angle data corresponding to the UV image of the face at each angle.

S4028: Determine whether full-angle image shooting is completed.

If yes, it indicates that shooting of the UV image of the face of the user at each angle is completed. The user may be informed, by using the voice prompt or the UI interface, that image pre-shooting is completed, and then the mobile phone 100 may enter the real-time viewing phase. If no, S4025 is performed until the UV image of the face of the user at each angle is shot.

It may be understood that an execution sequence of step S4021 to step S4028 is merely an example. In some other embodiments, another execution sequence may be used, or some steps may be split or combined. This is not limited herein. For example, in some embodiments, S4028 and S4025 may be combined into one step. For example, the combined step is: calculating the face angle, determining whether full-angle image shooting is completed, and if full-angle image shooting is not completed, generating the prompt information to prompt the user to adjust the face posture; and if full-angle image shooting is completed, cropping the UV image of the facial region based on the key point, and then performing sunscreen detection on the UV image of the facial region in S4026.

### Real-time viewing phase

The following describes in detail a processing process of a real-time viewing phase corresponding to the processing process of the image pre-shooting phase of the mobile phone 100 shown in FIG. 4A and FIG. 4B.

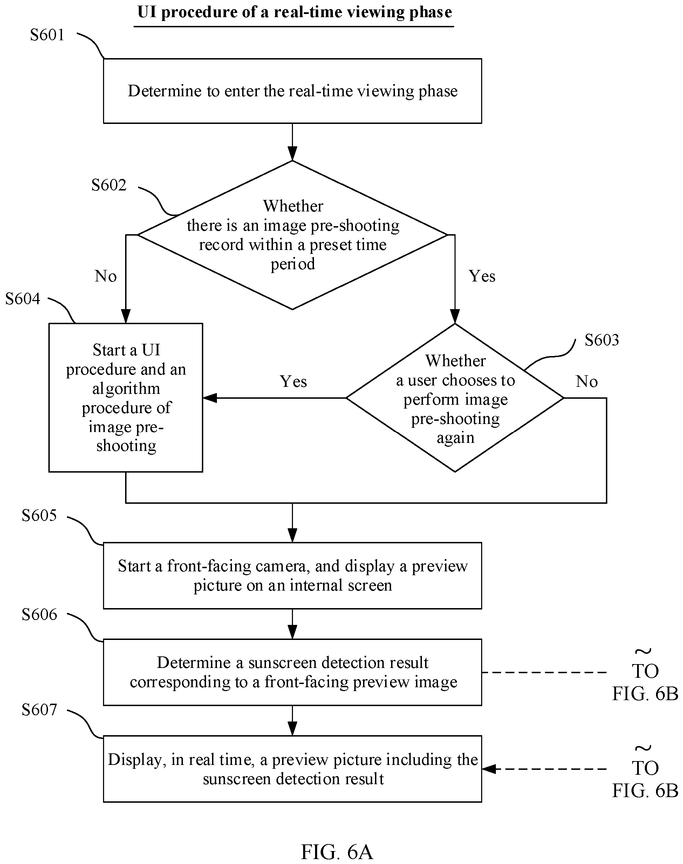

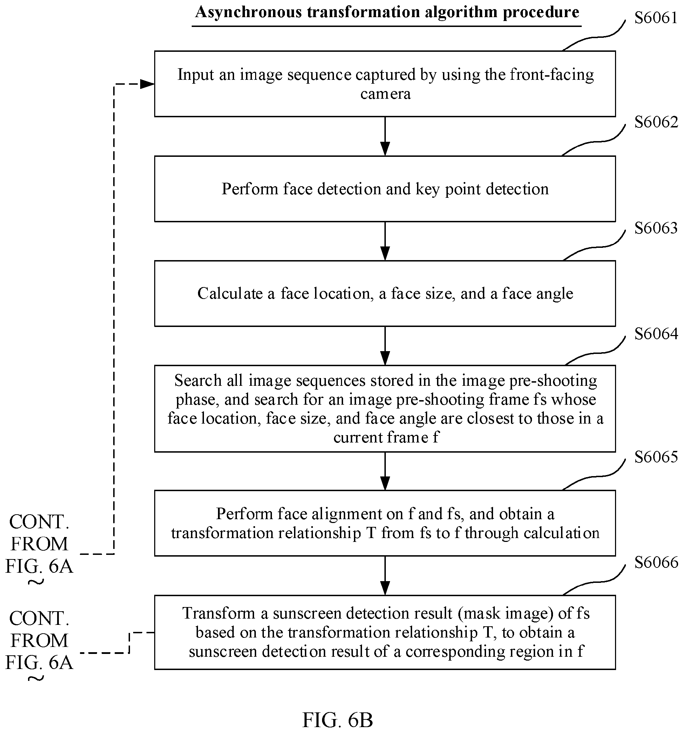

The processing process of the real-time viewing phase shown in FIG. 6A and FIG. 6B includes a UI procedure and an asynchronous transformation algorithm procedure of the real-time viewing phase. Steps in a flowchart shown in FIG. 6A and FIG. 6B may also be performed by the mobile phone 100 shown in FIG. 3. First, the UI procedure of the real-time viewing phase shown in FIG. 6A is described. Specifically, refer to FIG. 6A. The UI procedure of the real-time viewing phase in the sunscreen detection method provided in this embodiment of this application includes the following steps.

S601: Determine to enter the real-time viewing phase.

For example, in some embodiments, after the mobile phone 100 determines that full-angle image shooting is completed, and informs, by using a voice or a UI, a user that image pre-shooting is completed, the mobile phone 100 may determine to enter the real-time viewing phase. Then, the UI procedure of the real-time viewing phase is started.

S602: Determine whether there is an image pre-shooting record within a preset time period. If yes, it indicates that there is the image pre-shooting record within the preset time period, and S603 may be performed to determine whether the user needs to perform image pre-shooting again; otherwise, it indicates that there is no image pre-shooting record within the preset time period, and S604 may be performed to start a UI procedure and an algorithm procedure of image pre-shooting. The preset time period may be, for example,
a prespecified time period like half an hour from time of previous image pre-shooting.

S603: Determine whether the user chooses to perform image pre-shooting again. If yes, it indicates that image pre-shooting needs to be performed again, and S604 is performed; otherwise, it indicates that image pre-shooting does not need to be performed again, and S605 is performed.

For example, in some embodiments, even if the mobile phone 100 determines that there is the image pre-shooting record within the preset time period, after previous image pre-shooting ends, the user may re-apply sunscreen, or the user sweats a lot, washes the face, or the like, causing a change between a sunscreen application status of the user and a sunscreen application status in previous image pre-shooting. Therefore, the user may determine, on a "Do you want to perform image pre-shooting again" notification 1006 popped up on the interface of the mobile phone 100 shown in FIG. 2K, whether to trigger the mobile phone 100 to perform image pre-shooting again.

S604: Start the UI procedure and the algorithm procedure of image pre-shooting. To be specific, UV images are re-shot, and sunscreen detection results of the UV images are determined based on the shot UV images. For details about the UI procedure and the algorithm procedure of image pre-shooting, refer to the foregoing related descriptions of the UI procedure and the algorithm procedure in the image pre-shooting phase shown in FIG. 4A and FIG. 4B. Details are not described herein again.

S605: Start a front-facing camera 101, and display a preview picture on an internal screen 103.

In some embodiments, after the mobile phone 100 determines that there is the image pre-shooting record within the preset time period and image pre-shooting does not need to be performed again, or after the mobile phone 100 completes a new UI procedure and a new UI algorithm procedure of image pre-shooting, the mobile phone may start the front-facing camera 101 to capture a front-facing preview image (RGB image) of the user, and the internal screen 103 displays a preview picture in real time.

It should be noted that after starting the front-facing camera 101, the mobile phone 100 continuously captures the front-facing preview image of the user.

S606: Determine a sunscreen detection result corresponding to the front-facing preview image.

In other words, after the mobile phone 100 captures the front-facing preview image of the user by using the front-facing camera 101, the mobile phone 100 may determine, by using an asynchronous transformation algorithm, a sunscreen detection result corresponding to the front-facing preview image. For example, the mobile phone 100 runs the asynchronous transformation algorithm shown in FIG. 6B, selects a UV image closest to a current frame (the front-facing preview image) from UV images of the face of the user at various angles captured in the image pre-shooting phase shown in FIG. 4A and FIG. 4B, and fuse a mask corresponding to the UV image and the current frame. The specific asynchronous transformation algorithm may include an asynchronous transformation algorithm based on face alignment and an asynchronous transformation algorithm based on three-dimensional face reconstruction. Corresponding to the processing process of the image pre-shooting phase shown in FIG. 4A and FIG. 4B, the asynchronous transformation algorithm based on face alignment is used in FIG. 6B, and details are described below with reference to S6061 to S6066. Details are not described herein. The asynchronous transformation algorithm based on three-dimensional face reconstruction is described in detail in the following with reference to another embodiment.

S607: Display, in real time, a preview picture including the sunscreen detection result.

To be specific, the UV image closest to the current frame (the front-facing preview image) is selected from the UV images of the face of the user at various angles captured in the image pre-shooting phase shown in FIG. 4A and FIG. 4B by running the asynchronous transformation algorithm, and the mask image corresponding to the UV image and the current frame are fused as different layers to obtain a fused image. In the fused image, different regions of the mask image are filled with different colors in RGB color space, and the image filled with the colors is displayed in real time as the preview picture.

For example, the mobile phone 100 finally displays an RGB preview picture P4 in real time by using the internal screen 103 shown in FIG. 2I, where P4 includes regions Z4 and Z5 with no sunscreen application that are marked by using different colors for the user to view.

It may be understood that an execution sequence of step S601 to step S607 is merely an example. In some other embodiments, another execution sequence may be used, or some steps may be split or combined. This is not limited herein.

In the embodiment shown in FIG. 6A and FIG. 6B, the front-facing preview image of the facial region that is marked by using a specific color and in which the sunscreen needs to be re-applied can be finally displayed in real time by using the internal screen 103, namely, a display with a relatively large area, of the mobile phone 100. In addition, the front-facing preview image is an RGB image, namely, a color image. Therefore, display of the detection result may be maximized and performed in the color image with relatively good user viewing experience on the premise that the sunscreen detection result can be displayed in real time. This facilitates the user to view the detection result, and improves user experience.

The following continues to describe in detail the asynchronous transformation algorithm based on face alignment in S606 with reference to FIG. 6B. Specifically, as shown in FIG. 6B, the asynchronous transformation algorithm based on face alignment provided in this embodiment of this application includes the following steps.

S6061: Input an image sequence captured by using the front-facing camera 101.

For example, the mobile phone 100 continuously captures N front-facing preview images f1 to fn by using the front-facing camera 101, and inputs an image sequence including f1 to fn into a processor 110 of the mobile phone 100.

S6062: Perform face detection and key point detection.

For example, the mobile phone 100 performs face detection on the input front-facing preview images f1 to fn by using the processor 110 based on a face detection model, and then performs key point detection on key regions such as five facial features (including the eyebrows, the eyes, the nose, and the mouth) and a facial contour in a facial region based on the detected facial region. In addition, a same key point marking method as that selected in S4022 in FIG. 4B is used to mark a facial key point.

S6063: Calculate a face location, a face size, and a face angle.

For example, the mobile phone 100 calculates features such as the face location, the face size, and the face angle in the front-facing preview image by using results of face detection and key point detection on the front-facing preview images f1 to fn that are obtained in S6062. Then, the mobile phone determines, from a UV image sequence shot in the image pre-shooting phase based on the features such as the face location, the face size, and the face angle in the front-facing preview image, a UV image that is closest to the front-facing preview image in terms of the face location, the face size, and the face angle.

S6064: Search all image sequences stored in the image pre-shooting phase, and search for an image pre-shooting frame fs whose face location, face size, and face angle are closest to those in a current frame f. The current frame f may be one frame of the front-facing preview images f1 to fn.

For example, in some embodiments, the mobile phone 100 searches the face location, size, and angle data of the UV image of the face at each angle that is obtained in S4026 and stored in the image pre-shooting phase in FIG. 4B, to search for the image pre-shooting frame fs (UV image) whose face location, face size, and face angle are closest to those in the current frame f.

S6065: Perform face alignment on f and fs, and obtain a transformation relationship T from fs to f through calculation. The transformation relationship T from fs to f means a location transformation relationship between each key point in fs and a corresponding key point in f.

For example, the mobile phone 100 may perform triangulation on the current frame f and the image pre-shooting frame fs based on the facial key point, and then perform affine transformation on each pair of face triangles in the front-facing preview image f and the image pre-shooting frame fs. In this case, each triangle in the image pre-shooting frame fs is aligned with a corresponding triangle in the preview image f after transformation. A set of these transformations forms the transformation relationship T.

S6066: Transform a sunscreen detection result (mask image) of fs based on the transformation relationship T, to obtain a sunscreen detection result of a corresponding region in f.

To be specific, after the transformation relationship T from fs to f is determined, the sunscreen detection result (mask image) of fs is transformed based on the transformation relationship T, to obtain a transformed mask image. In this case, the transformed mask image is the sunscreen detection result of f.

Then, the mobile phone 100 fuses f and the transformed mask image, to obtain a fused image, and displays the fused image as a preview picture.

It may be understood that an execution sequence of step S6061 to step S6066 is merely an example. In some other embodiments, another execution sequence may be used, or some steps may be split or combined. This is not limited herein.

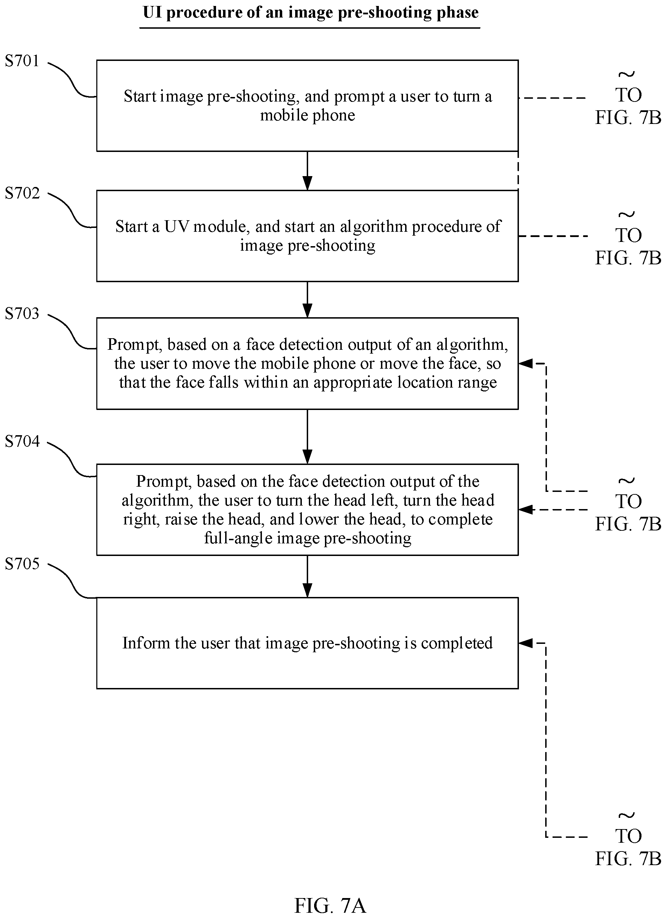

The following continues to use the mobile phone 100 as an example to describe in detail another specific process in which the mobile phone 100 performs sunscreen detection provided in an embodiment of this application. Similarly, entire sunscreen detection is divided into an image pre-shooting phase and a real-time viewing phase. A specific processing process of the image pre-shooting phase is shown in FIG. 7A to FIG. 7C.

### Image pre-shooting phase

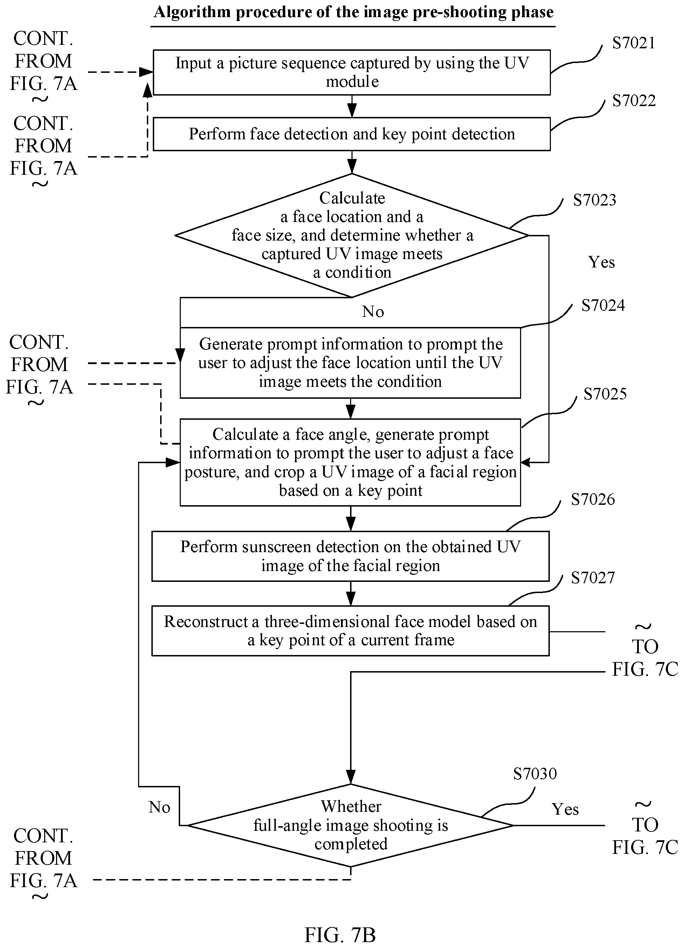

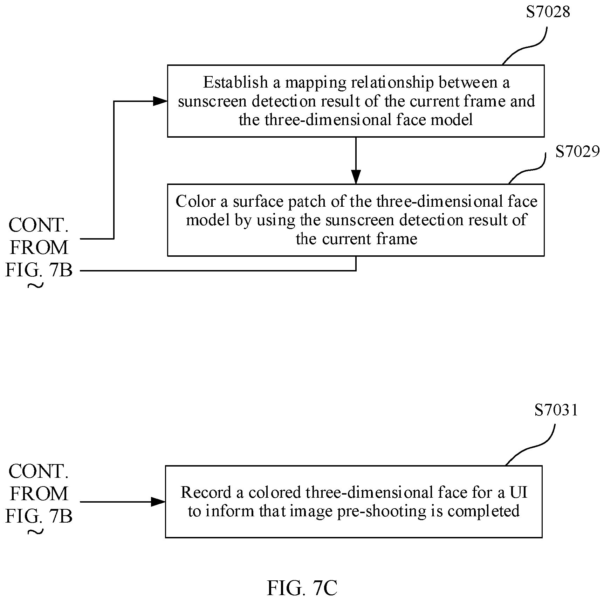

A processing process of an image pre-shooting phase shown in FIG. 7A to FIG. 7C includes a UI procedure of the image pre-shooting phase and an algorithm procedure of the image pre-shooting phase. Steps in FIG. 7A to FIG. 7C may be performed by a mobile phone 100. The UI procedure S701 to S705 of the image pre-shooting phase shown in FIG. 7A is completely the same as the UI procedure S401 to S405 of the image pre-shooting phase shown in FIG. 4A, and details are not described below again. The following describes in detail only content of a different part, namely, the "algorithm procedure of the image pre-shooting phase", between a flowchart shown in FIG. 7B and FIG. 7C and the flowchart shown in FIG. 4B. A difference between the "algorithm procedure of the image pre-shooting phase" in FIG. 7B and FIG. 7C and FIG. 4B lies in that: Data representation forms that are finally obtained in FIG. 7B and FIG. 7C and FIG. 4B and that are used to represent sunscreen detection results of UV images are different.

The "algorithm procedure of the image pre-shooting phase" in FIG. 7B and FIG. 7C is: The mobile phone 100 performs three-dimensional face reconstruction based on a UV image sequence and key point information of each UV image, to obtain a reconstructed three-dimensional face, colors the three-dimensional face by using an obtained mask image corresponding to each UV image, to obtain a colored three-dimensional face, and records related data of the colored three-dimensional face. Then, a sunscreen application status in a facial region of a front-facing preview image is determined based on the colored three-dimensional face.

The "algorithm procedure of the image pre-shooting phase" in FIG. 4B is: The mobile phone 100 determines a mask image corresponding to a UV image at each angle that meets a condition and key point information of each UV image. Then, a sunscreen application status in a facial region of a front-facing preview image is determined based on the mask image corresponding to the UV image at each angle that meets the condition and the key point information of each UV image.

Specifically, the algorithm procedure of the image pre-shooting phase shown in FIG. 7B and FIG. 7C includes the following content.

S7021: Input a picture sequence captured by using a UV module. Because the UV module includes the ultraviolet camera 102 and the ultraviolet supplementary light 104, the UV image sequence captured by using the UV module is also the image sequence captured by using the ultraviolet camera 102.

S7022: Perform face detection and key point detection.

For example, the mobile phone 100 performs face detection on the input UV image sequence or rear-facing preview image sequence by using the processor 110 based on a face detection model, and then performs key point detection on key regions such as five facial features (including the eyebrows, the eyes, the nose, and the mouth) and a facial contour in a facial region based on the detected facial region.

S7023: Calculate the face location and a face size, and determine whether the captured UV image meets a condition. If yes, it indicates that the captured UV image meets the condition, and the face location and the face distance fall within an appropriate range, and S7025 is performed; if no, it indicates that the captured UV image does not meet the condition, for example, the face is far away from the mobile phone 100, and a facial region in the shot UV image is small, or a part of the facial region is not shot, S7024 is performed, and corresponding prompt information is generated to prompt a user to adjust the face location until the face falls within the appropriate location range.

In some embodiments, the mobile phone 100 may further indicate, by outputting a voice prompt based on whether the distance between the geometric center of the face in the UV image sequence or the rear-facing preview image sequence and the geometric center of the picture in the image is less than a preset distance threshold and whether the ratio of the face size to the image size falls within a preset range, the user to move the mobile phone 100 or move the face of the user, until the face falls within an appropriate location range.

S7024: Generate prompt information to prompt the user to adjust the face location until the UV image meets the condition.

To be specific, when determining that the captured UV image does not meet the condition, the mobile phone 100 may generate the prompt information, for example, moving leftward, moving rightward, moving closer, or moving farther, and prompt, in a form of a text, a voice, or the like, the user to move the mobile phone 100 or move the face until the face falls within the appropriate location range. It is not difficult to understand that if a size and a distance of the captured UV image are appropriate, a detected sunscreen application status is relatively accurate.

S7025: Calculate a face angle, generate prompt information to prompt the user to adjust a face posture, and crop a UV image of the facial region based on the key point. For details, refer to the foregoing related description of S4025 in FIG. 4B. Details are not described herein again.

S7026: Perform sunscreen detection on the obtained UV image of the facial region. For details, refer to the foregoing related description of S4026 in FIG. 4B. Details are not described herein again.

S7027: Reconstruct a three-dimensional face model based on a key point of a current frame.

The current frame herein means a UV image of the facial region corresponding to a UV image of the face at each angle that is captured by using the ultraviolet camera 102 after the mobile phone 100 determines, in the image pre-shooting phase, that the face location and the face distance are appropriate.

It should be understood that after the mobile phone 100 starts the ultraviolet camera 102, the ultraviolet camera 102 continuously captures the UV image of the face at each angle. Therefore, each frame of the UV image of the face at each angle may be referred to as the current frame.

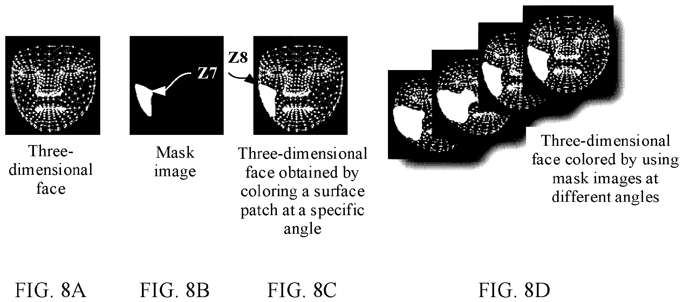

For example, the mobile phone 100 implements three-dimensional face reconstruction by using a three-dimensional morphable face model (3D Morphable Face Model, 3DMM) based on a key point of the UV image of the face at each angle continuously captured by using the ultraviolet camera 102, to obtain a three-dimensional face shown in FIG. 8A.

S7028: Establish a mapping relationship between a sunscreen detection result of the current frame and the three-dimensional face.

The sunscreen detection result of the current frame is also a sunscreen detection result of the UV image of the face at each angle, and is, for example, the black-and-white image shown in FIG. 5B, or the gray-scale image.

For example, two-dimensional projection is performed on the three-dimensional face at different angles, and two-dimensional images obtained through projection are in a one-to-one correspondence with sunscreen detection results (mask images) corresponding to UV images at different angles. If each facial region in the three-dimensional face is a "surface patch", the two-dimensional image obtained through projection is obtained by projecting a corresponding three-dimensional surface patch in the three-dimensional face.

For example, in some embodiments, for the three-dimensional face shown in FIG. 8A, a surface patch corresponding to a region Z7 with insufficient application in a mask image shown in FIG. 8B is Z8 shown in FIG. 8C.

S7029: Color the surface patch of the three-dimensional face by using the sunscreen detection result of the current frame.

For example, for a region with sufficient application and a region with insufficient application in the mask image that are represented by different colors, corresponding surface patches in the three-dimensional face are respectively colored by using the different colors. However, for a region without application in the mask image, a corresponding surface patch in the three-dimensional face is not colored. Alternatively, for the region without application in the mask image, the corresponding surface patch in the three-dimensional face may be colored by using a color that is different from the colors of the surface patches corresponding to the region with sufficient application and the region with insufficient application.

In some embodiments, the user is more concerned with the region with insufficient application and the region without application. Therefore, for the region with insufficient application and the region without application in the mask image, corresponding surface patches in the three-dimensional face may alternatively be colored by using different colors. A specific coloring manner may be determined based on a requirement. This is not limited in this application.

In some embodiments, because UV images of the user at various angles correspond to mask images (namely, sunscreen detection results), the mask images corresponding to UV images at different angles need to be used to color the three-dimensional face. A result of respectively coloring the three-dimensional face on the mask images corresponding to the UV images at the different angles may be shown in FIG. 8D.

S7030: Determine whether full-angle image shooting is completed. If yes, it indicates that full-angle image shooting is completed, and S7031 is performed to record the colored three-dimensional face; otherwise, it indicates that full-angle image shooting is still not completed, and S7025 is returned until the UV image of the face of the user at each angle is shot.

S7031: Record the colored three-dimensional face for a UI to inform that image pre-shooting is completed.

To be specific, after determining that full-angle UV image shooting is completed, the mobile phone 100 stores the colored three-dimensional face, and may inform, by using the UI, the user that image pre-shooting is completed. For example, after determining that image pre-shooting is completed, the mobile phone 100 pops up, on an external screen 106, the "Turn to the internal screen" prompt 1005 shown in FIG. 2G, to inform the user that image pre-shooting is completed and prompt the user to turn the mobile phone 100 to shoot the front-facing preview image.

It may be understood that an execution sequence in the flowchart shown in FIG. 7A to FIG. 7C is merely an example. In some other embodiments, another execution sequence may be used, or some steps may be split or combined. This is not limited herein.

### Real-time viewing phase

The following describes in detail a processing process of a real-time viewing phase corresponding to the processing process of the image pre-shooting phase of the mobile phone 100 shown in FIG. 7A to FIG. 7C.

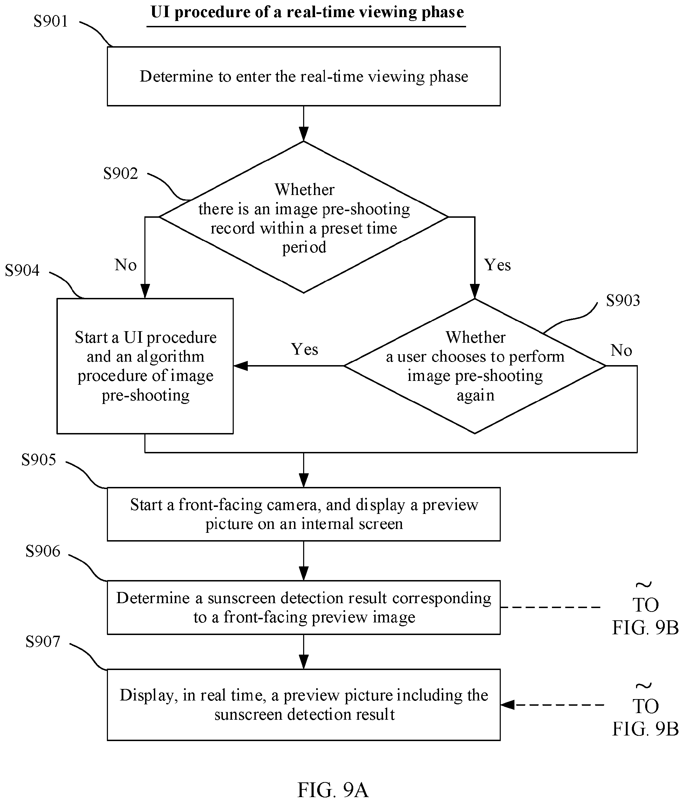

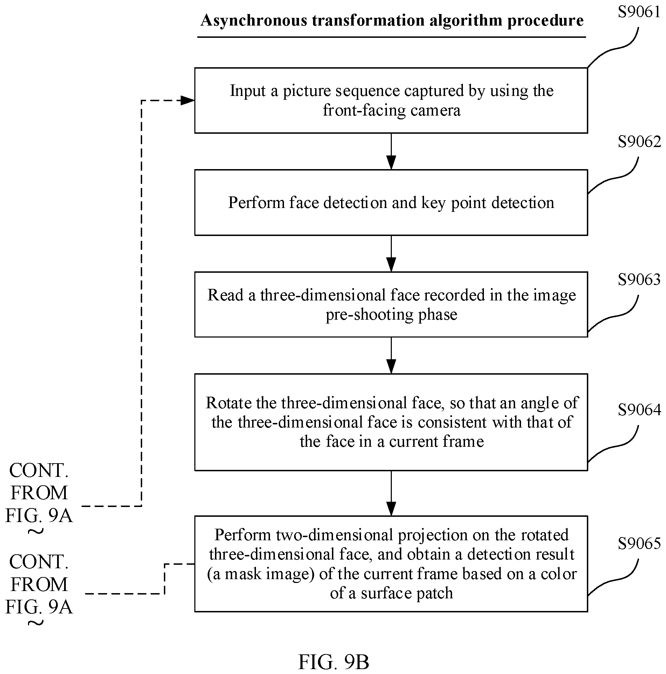

The processing process of the real-time viewing phase shown in FIG. 9A and FIG. 9B includes a UI procedure and an asynchronous transformation algorithm procedure of the real-time viewing phase. Steps in a flowchart shown in FIG. 9A and FIG. 9B may also be performed by the mobile phone 100 shown in FIG. 3. S901 to S907 in the UI procedure of the real-time view phase in the flowchart shown in FIG. 9A are completely the same as S601 to S607 in the UI procedure of the real-time view phase shown in FIG. 6A. The following only provides a brief description, and details are not described again. The UI procedure of the real-time view phase shown in FIG. 9A includes the following content.

S901: Determine to enter the real-time viewing phase.

For example, in some embodiments, after the mobile phone 100 determines that full-angle image shooting is completed, and informs, by using a voice or a UI, a user that image pre-shooting is completed, the mobile phone 100 may determine to enter the real-time viewing phase. Then, the UI procedure of the real-time viewing phase is started.

S902: Determine whether there is an image pre-shooting record within a preset time period. If yes, it indicates that there is the image pre-shooting record within the preset time period, and S903 may be performed to determine whether the user needs to perform image pre-shooting again; otherwise, it indicates that there is no image pre-shooting record within the preset time period, and S904 may be performed to start a UI procedure and an algorithm procedure of image pre-shooting. The preset time period may be, for example,
a prespecified time period like half an hour from time of previous image pre-shooting.

S903: Determine whether the user chooses to perform image pre-shooting again. If yes, it indicates that image pre-shooting needs to be performed again, and S904 is performed; otherwise, it indicates that image pre-shooting does not need to be performed again, and S905 is performed.

S904: Start the UI procedure and the algorithm procedure of image pre-shooting. For details about the UI procedure and the algorithm procedure of image pre-shooting, refer to the foregoing related descriptions of the UI procedure and the algorithm procedure in the image pre-shooting phase shown in FIG. 7A to FIG. 7C. Details are not described herein again.

S905: Start a front-facing camera 101, and display a preview picture on an internal screen 103. In some embodiments, after the mobile phone 100 determines that there is the image pre-shooting record within the preset time period and image pre-shooting does not need to be performed again, or after the mobile phone 100 completes a new UI procedure and a new UI algorithm procedure of image pre-shooting, the mobile phone may start the front-facing camera 101 to capture a front-facing preview image (RGB image) of the user, and the internal screen 103 displays a preview picture in real time.

S906: Determine a sunscreen detection result corresponding to the front-facing preview image.

In other words, after the mobile phone 100 captures the front-facing preview image of the user by using the front-facing camera 101, the mobile phone 100 may determine, by using an asynchronous transformation algorithm, a sunscreen detection result corresponding to the front-facing preview image. A specific asynchronous transformation algorithm is described in detail below with reference to S9061 to S9065. Details are not described herein again.

S907: Display, in real time, a preview picture including the sunscreen detection result.

To be specific, a mask image determined by running the asynchronous transformation algorithm and a current frame are fused as different layers to obtain a fused image. In the fused image, different regions of the mask image are filled with different colors in RGB color space, and the image filled with the colors is displayed in real time as the preview picture. The following describes in detail the asynchronous transformation algorithm in the real-time viewing phase in the flowchart shown in FIG. 9B. S9061 and S9062 filled with "gray backgrounds" are completely the same as S6061 and S6062 in the asynchronous transformation algorithm in the real-time viewing phase shown in FIG. 6B. The following provides a brief description, and details are not described again. S9063 to S9065 in the asynchronous transformation algorithm procedure shown in FIG. 9B are described in detail. The asynchronous transformation algorithm shown in FIG. 9B includes the following content.

S9061: Input a picture sequence captured by using the front-facing camera.

For example, the mobile phone 100 continuously captures N front-facing preview images f1 to fn by using the front-facing camera 101, and inputs an image sequence including f1 to fn into a processor 110 of the mobile phone 100.

S9062: Perform face detection and key point detection.

For example, the mobile phone 100 performs face detection on the input front-facing preview images f1 to fn by using the processor 110 based on a face detection model, and then performs key point detection on key regions such as five facial features (including the eyebrows, the eyes, the nose, and the mouth) and a facial contour in a facial region based on the detected facial region. In addition, a same key point marking method as that selected in S7022 in FIG. 7B is used to mark a facial key point.

S9063: Read a three-dimensional face recorded in the image pre-shooting phase.

In other words, the colored three-dimensional face recorded in S7032 in the image pre-shooting phase shown in FIG. 7C is read. The three-dimensional face includes colored surface patches of sunscreen detection results (mask images) corresponding to UV images at different angles.

S9064: Rotate the three-dimensional face, so that an angle of the three-dimensional face is consistent with that of the face in the current frame.

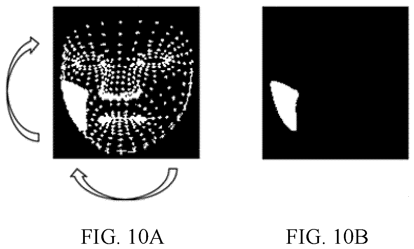

The three-dimensional face may be changed in angle, and two-dimensional projection may be performed on the three-dimensional face. A distance between a facial key point in a projected two-dimensional image and a facial key point in the current frame (the front-facing preview image shot by using the front-facing camera 101) may be calculated. For example, the colored three-dimensional face is rotated to a state shown in FIG. 10A, and the three-dimensional face shown in FIG. 10A is projected into a two-dimensional image shown in FIG. 10B. Weighted summation is performed on location differences between various facial key points in the two-dimensional image shown in FIG. 10B and various corresponding key points in the current frame. When it is determined that a weighted summation result is close to zero or as small as possible, it is determined that a current rotation angle of the three-dimensional face shown in FIG. 10A is consistent with that in the current frame.

S9065: Perform two-dimensional projection on the rotated three-dimensional face, and obtain a detection result (a mask image) of the current frame based on a color of the surface patch.

In some embodiments, an image obtained by performing two-dimensional projection on the rotated three-dimensional face may be determined as the mask image corresponding to the current frame (the front-facing preview image). In addition, the mask corresponding to the UV image and the current frame are fused as different layers to obtain a fused image. In the fused image, different regions of the mask image are filled with different colors in RGB color space, and the image filled with the colors is displayed in real time as the preview picture.

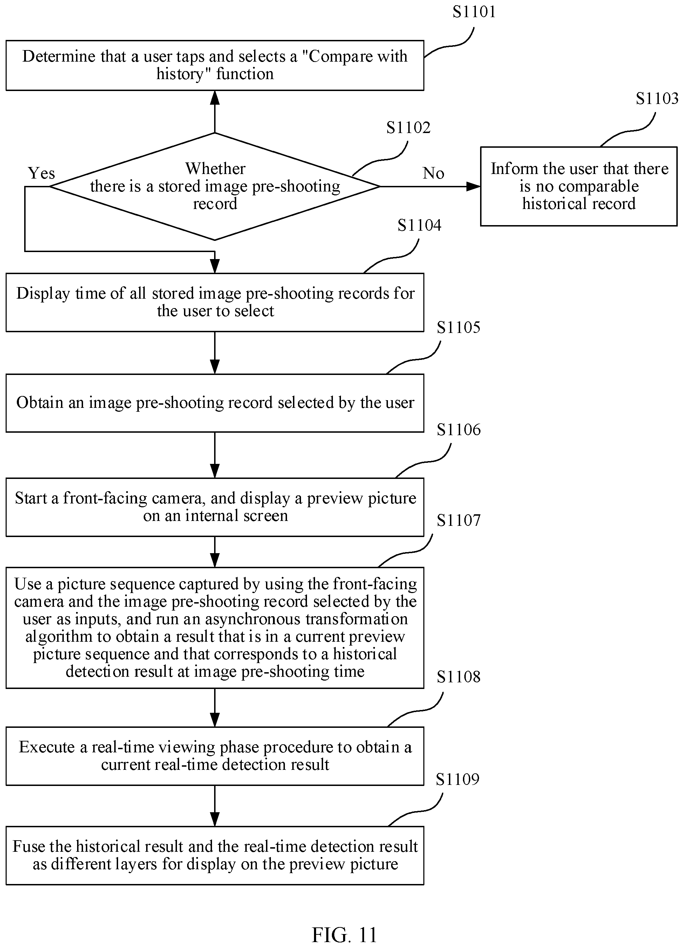

In addition, in this embodiment of this application, a function of comparing a historical sunscreen application status with a current application status may be further implemented. FIG. 11 is a procedure of comparing a historical sunscreen application status with a current sunscreen application status according to an embodiment of this application. Steps may also be performed by a mobile phone 100. Specifically, a flowchart shown in FIG. 11 includes the following steps.

S1101: Determine that a user taps and selects a "Compare with history" function.

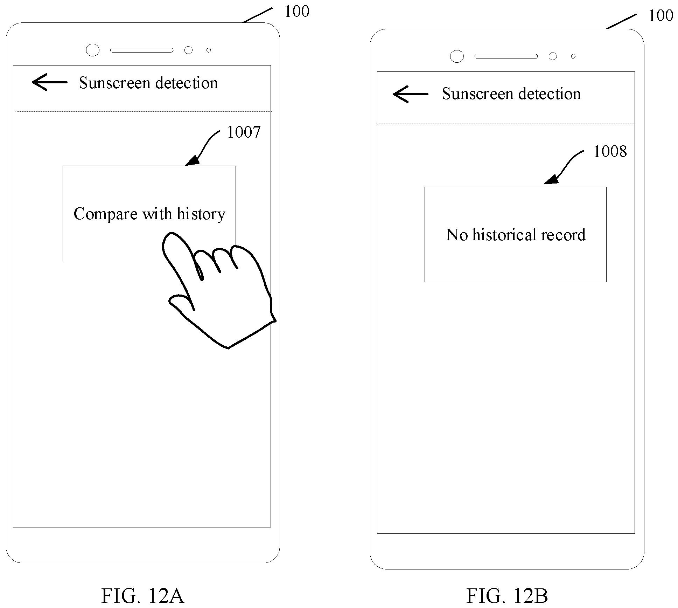

For example, in an embodiment shown in FIG. 12A, the user taps a "Compare with history" control 1007, and the mobile phone 100 detects the tap operation of the user, and determines that the user taps and selects the "Compare with history" function. It may be understood that a name of the "Compared with history" control 1007 herein is merely an example. In actual application, another name may be used to represent a control corresponding to a history comparison function. This is not limited in this application.

S1102: Determine whether there is a stored image pre-shooting record. If yes, it indicates that there is the stored image pre-shooting record, and S1104 is performed, to display the stored image pre-shooting record for the user to select; otherwise, it indicates that there is no stored image pre-shooting record, and S1103 is performed, to inform the user that there is no comparable historical record.

S1103: Inform the user that there is no comparable historical record.

For example, the user taps the "Compared with history" control 1007 shown in FIG. 12A, and the mobile phone 100 determines that there is no stored image pre-shooting record, and then a "No historical record" control 1008 shown in FIG. 12B pops up, to inform the user that there is no comparable history record.

S1104: Display time of all stored image pre-shooting records for the user to select.

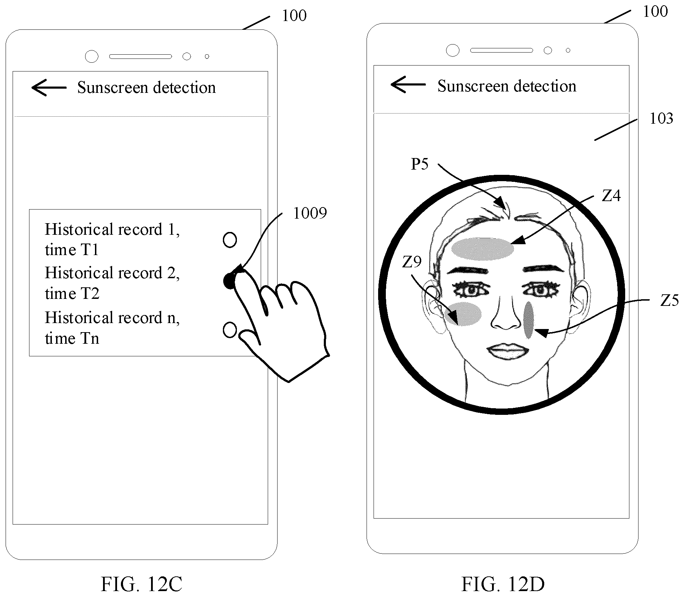

For example, the user taps the "Compare with history" control 1007 shown in FIG. 12A, the mobile phone 100 determines that there is the stored image pre-shooting record, and an interface shown in FIG. 12C is displayed, to display information such as the time of the stored image pre-shooting records for the user to select.

S1105: Obtain an image pre-shooting record selected by the user.

In some embodiments, the user may select one image pre-shooting record. In some embodiments, the user may further select a plurality of image pre-shooting records at the same time. For example, if the user taps a control 1009 on the interface shown in FIG. 12C, the mobile phone 100 obtains an image pre-shooting record 2 selected by the user.

S1106: Start a front-facing camera 101, and display a preview picture on an internal screen 103.

For example, after determining that the user selects one or more image pre-shooting records, the mobile phone 100 starts the front-facing camera 101 to capture a front-facing preview image of the user, and displays a preview image on the internal screen 103.

S1107: Use a picture sequence captured by using the front-facing camera 101 and the image pre-shooting record selected by the user as inputs, and run an asynchronous transformation algorithm to obtain a result that is in a current preview picture sequence and that corresponds to a historical detection result at the image pre-shooting time.

To be specific, a mapping relationship between a historical detection result (mask image) at image pre-shooting time corresponding to an image pre-shooting record and a front-facing preview image captured by using the front-facing camera 101 in real time is determined by running the asynchronous transformation algorithm. Then, a mapping detection result obtained by mapping the historical detection result (mask image) at the image pre-shooting time corresponding to the image pre-shooting record is determined based on the mapping relationship. In other words, the historical detection result corresponding to the image pre-shooting record is transformed, by using the asynchronous transformation algorithm, into a display result corresponding to each facial region location on a current preview interface.

The asynchronous transformation algorithm may be any asynchronous transformation algorithm in the embodiment shown in FIG. 6B or FIG. 9B.

S 1108: Execute a real-time viewing phase procedure to obtain a current real-time detection result.

In other words, the real-time viewing phase procedure is executed for a current sunscreen application status, to obtain the current real-time detection result.

S 1109: Fuse the historical result and the real-time detection result as different layers for display on the preview picture. In this way, the user can intuitively compare the historical detection result corresponding to the historical record selected by the user with the current real-time detection result.

For example, in an embodiment shown in FIG. 12D, the mobile phone 100 fuses the historical result, the real-time detection result, and the current frame (front-facing preview image), so that the user can intuitively view that a region without sunscreen application is Z9, and regions without sunscreen application currently are Z4 and Z5 in the historical result. The historical result and the real-time detection result may be displayed in different colors.

An embodiment of this application further provides a computer-readable storage medium. The computer-readable storage medium stores a computer program. When the computer program is executed by a processor, the steps in the foregoing method embodiments can be implemented.

An embodiment of this application provides a computer program product. When the computer program product runs on a mobile terminal, the steps in the foregoing method embodiments can be implemented by the mobile terminal.

An embodiment of this application further provides an electronic device. The electronic device includes: at least one processor, a memory, and a computer program that is stored in the memory and that is executable on the at least one processor. When executing the computer program, the processor implements the steps in any one of the foregoing method embodiments.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a nonvolatile memory, and/or a storage element), at least one input device, and at least one output device.

The program code may be applied to input instructions to perform the functions described in this application and generate output information. The output information may be applied to one or more output devices in a known manner. For a purpose of this application, a processing system includes any system that has a processor like a digital signal processor (Digital Signal Processor, DSP), a microcontroller, an application specific integrated circuit (Application Specific Integrated Circuit, ASIC), or a microprocessor.

The program code may be implemented in a high-level programming language or an object-oriented programming language to communicate with the processing system. The program code can also be implemented in an assembly language or a machine language when needed. The mechanisms described in this application are not limited to the scope of any particular programming language. In either case, the language may be a compiled language or an interpreted language.

In some cases, the disclosed embodiments may be implemented by hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed by using a network or another computer-readable medium. Therefore, the machine-readable medium may include any mechanism for storing or transmitting information in a machine-readable (for example, a computer-readable) form. The machine-readable medium includes but is not limited to a floppy disk, a compact disc, an optical disc, a compact disc read-only memory (CD-ROM), a magnetooptical disc, a read-only memory (Read Only Memory, ROM), a random access memory (Random Access Memory, RAM), an erasable programmable read-only memory (Erasable Programmable Read Only Memory, EPROM), an electrically erasable programmable read-only memory (Electrically Erasable Programmable Read-Only Memory, EEPROM), a magnetic or an optical card, a flash memory, or a tangible machine-readable memory that is configured to transmit information (for example, a carrier, an infrared signal, or a digital signal) by using a propagating signal in an electrical, optical, acoustic, or another form over the Internet. Therefore, the machine-readable medium includes any type of machine-readable medium that is suitable for storing or transmitting electronic instructions or information in a machine-readable (for example, a computer-readable) form.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in the device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolving technical issues proposed in this application. In addition, to highlight an innovative part of this application, a unit/module that is not closely related to resolving the technical issues proposed in this application is not introduced in the foregoing device embodiments of this application. This does not mean that there are no other units/modules in the foregoing device embodiments.

It should be noted that in the examples and this specification of this patent, relational terms such as first and second are used only to differentiate an entity or operation from another entity or operation, and do not require or imply that any actual relationship or sequence exists between these entities or operations. Moreover, terms "include", "comprise", or any other variants thereof are intended to cover a non-exclusive inclusion, so that a process, a method, an article, or a device that includes a list of elements includes those elements, and also includes other elements which are not expressly listed, or further includes elements inherent to this process, method, article, or device. An element preceded by a statement "includes a" does not, without more constraints, preclude the presence of additional identical elements in the process, method, article, or device that includes the element.

Although this application has been illustrated and described with reference to some embodiments of this application, a person of ordinary skill in the art should understand that various changes may be made to this application in form and detail without departing from the scope of this application.

## Claims

1. A facial feature detection method, applied to an electronic device, wherein the electronic device comprises a first camera and a second camera that are located on different sides of the electronic device, and a first screen located on a same side as the second camera, and the method comprises:
detecting a detection instruction for detecting a facial feature of a user;
obtaining, in response to the detection instruction, a plurality of ultraviolet images comprising a face of the user that are captured by using the first camera;
obtaining a first preview image comprising the face of the user that is captured by using the second camera, wherein the first preview image is a color image;
determining a facial feature of the user in the preview image based on a facial feature of the user in each ultraviolet image;
adjusting a pixel value of a pixel of a facial region of the user in the first preview image based on the determined facial feature of the user in the first preview image, to obtain a target image; and
displaying the target image by using the first screen.

2. The method according to claim 1, wherein the ultraviolet image is used to detect a sunscreen application status of the face of the user.

3. The method according to claim 2, wherein
the obtaining, in response to the detection instruction, a plurality of ultraviolet images comprising a face of the user that are captured by using the first camera comprises:
in response to the detection instruction, when it is determined that a plurality of ultraviolet images comprising the face of the user need to be recaptured, prompting the user to face the first camera, and capturing, by using the first camera, the plurality of ultraviolet images comprising the face of the user.

4. The method according to claim 3, wherein the obtaining a first preview image comprising the face of the user that is captured by using the second camera comprises:
when it is determined that recapture of the plurality of ultraviolet images comprising the face of the user is completed, or when it is determined that there is no need to recapture a plurality of ultraviolet images comprising the face of the user, prompting the user to face the second camera, and capturing, by using the second camera, the first preview image comprising the face of the user.

5. The method according to any one of claims 2 to 4, further comprising:
determining a sunscreen detection result of the face of the user in each ultraviolet image, key point information of each ultraviolet image, and key point information of the first preview image.

6. The method according to claim 5, wherein the facial feature of the user comprises the sunscreen detection result of the face of the user; and
the determining a facial feature of the user in the first preview image based on a facial feature of the user in each ultraviolet image comprises:
determining a sunscreen detection result of the face in the first preview image based on the determined sunscreen detection result of the face of the user in each ultraviolet image, the determined key point information of each ultraviolet image, and the determined key point information of the first preview image.

7. The method according to claim 6, wherein
the determining a sunscreen detection result of the face in the first preview image based on the determined sunscreen detection result of the face of the user in each ultraviolet image, the determined key point information of each ultraviolet image, and the determined key point information of the first preview image comprises:
determining, based on the key point information of each ultraviolet image and the key point information of the first preview image, a target ultraviolet image that matches the first preview image in the plurality of ultraviolet images of the face of the user;
determining a transformation relationship between the target ultraviolet image and the first preview image based on key point information of the target ultraviolet image and the key point information of the first preview image; and
determining the sunscreen detection result of the face of the user in the first preview image based on the transformation relationship and a sunscreen detection result corresponding to the target ultraviolet image.

8. The method according to claim 7, wherein
the determining, based on the key point information of each ultraviolet image and the key point information of the first preview image, a target ultraviolet image that matches the first preview image in the plurality of ultraviolet images of the face of the user comprises:
separately calculating a face location, a face size, and a face angle in each ultraviolet image based on the key point information of each ultraviolet image, and calculating a face location, a face size, and a face angle in the preview image based on the key point information of the first preview image; and
determining, from the plurality of ultraviolet images of the face of the user, an ultraviolet image whose face location, face size, and face angle are close to those in the first preview image as the target ultraviolet image.

9. The method according to claim 5, wherein the electronic device further comprises a second screen located on a same side as the first camera, and before the determining a sunscreen detection result of the face in the first preview image, the method further comprises:
separately calculating a face location, a face size, and a face angle in each ultraviolet image based on the key point information of each ultraviolet image;
generating first prompt information based on the calculated face location, face size, and face angle in each ultraviolet image; and
displaying the first prompt information by using the second screen, to prompt the user to adjust a face location and/or a face posture.

10. The method according to claim 9, wherein the electronic device further comprises a third camera located on the same side as the first camera, and the method further comprises:
obtaining, in response to the detection instruction, a plurality of second preview images comprising the face of the user that are captured by using the third camera;
determining key point information of each second preview image;
separately calculating a face location, a face size, and a face angle in each second preview image based on the key point information of each second preview image;
generating second prompt information based on the calculated face location, face size, and face angle in each second preview image; and
displaying the second prompt information by using the second screen, to prompt the user to adjust a face location and/or a face posture.

11. The method according to claim 7, wherein
the determining a transformation relationship between the target ultraviolet image and the first preview image based on key point information of the target ultraviolet image and the key point information of the first preview image comprises:
performing triangulation on a key point of the target ultraviolet image based on the key point information of the target ultraviolet image, and performing triangulation on a key point of the first preview image based on the key point information of the first preview image;
performing affine transformation between each face triangle obtained by performing triangulation in the target ultraviolet image and a corresponding face triangle in the first preview image, to calculate a transformation relationship between each face triangle in the target ultraviolet image and the corresponding face triangle in the first preview image; and
determining a set comprising the transformation relationship between each face triangle in the target ultraviolet image and the corresponding face triangle in the first preview image as the transformation relationship between the target ultraviolet image and the first preview image.

12. The method according to claim 7, wherein
the determining the sunscreen detection result of the face of the user in the first preview image based on the transformation relationship and a sunscreen detection result corresponding to the target ultraviolet image comprises:
transforming, based on the transformation relationship between the target ultraviolet image and the first preview image, the sunscreen detection result corresponding to the target ultraviolet image, to obtain a transformed sunscreen detection result corresponding to the target ultraviolet image; and
determining the transformed sunscreen detection result as the sunscreen detection result of the face of the user in the first preview image.

13. The method according to claim 6, wherein
the determining a sunscreen detection result of the face in the first preview image based on the determined sunscreen detection result of the face of the user in each ultraviolet image, the determined key point information of each ultraviolet image, and the determined key point information of the first preview image comprises:
performing three-dimensional face reconstruction based on the key point information of each ultraviolet image, to obtain an uncolored three-dimensional face and key point information of the three-dimensional face;
coloring the uncolored three-dimensional face based on the sunscreen detection result of the face of the user in each ultraviolet image, to obtain a colored three-dimensional face; and
determining the sunscreen detection result of the face of the user in the first preview image based on the colored three-dimensional face, the key point information of the three-dimensional face, and the key point information of the first preview image.

14. The method according to claim 13, wherein
the determining the sunscreen detection result of the face of the user in the first preview image based on the colored three-dimensional face, the key point information of the three-dimensional face, and the key point information of the first preview image comprises:
rotating the colored three-dimensional face in three-dimensional space to obtain three-dimensional faces at a plurality of angles;
performing two-dimensional projection on the three-dimensional faces at the plurality of angles to obtain projected faces at a plurality of angles, and determining, based on the key point information of the three-dimensional face, facial key point information corresponding to a projected face at each angle; and
selecting, based on the facial key point information corresponding to the projected face at each angle and the key point information of the first preview image, a projected face that matches the first preview image from the projected faces at the plurality of angles, and determining the matched projected face as the sunscreen detection result of the face of the user in the first preview image.

15. The method according to claim 14, wherein
the selecting, based on the facial key point information corresponding to the projected face at each angle and the key point information of the first preview image, a projected face that matches the first preview image from the projected faces at the plurality of angles comprises:
separately calculating a location difference between a facial key point in the projected face at each angle and a corresponding facial key point in the first preview image, and separately performing weighted summation on all location differences in the projected face at each angle; and
determining a projected face whose weighted summation result meets a condition as the projected face that matches the first preview image.

16. The method according to any one of claims 1 to 15, further comprising:
detecting an instruction for comparing the sunscreen application status of the face of the user with a historical sunscreen detection record;
determining, in response to the detection instruction, a plurality of historical ultraviolet images comprising the face of the user that correspond to the historical sunscreen detection record, key point information of each historical ultraviolet image, and a sunscreen detection result of the face of the user in each historical ultraviolet image;
determining a historical sunscreen detection result of the face of the user in the first preview image based on the key point information of each historical ultraviolet image, the sunscreen detection result of the face of the user in each historical ultraviolet image, and the key point information of the first preview image;
adjusting the pixel value of the pixel of the facial region of the user in the first preview image based on the determined historical sunscreen detection result of the face of the user in the first preview image, to obtain a to-be-fused image, wherein pixel values of pixels of sub-regions with different sunscreen application degrees are different in the facial region of the user in the to-be-fused image; and
fusing the target image and the to-be-fused image as different layers to obtain a fused image; and displaying the fused image by using the first screen.

17. The method according to claim 5, wherein the determining a sunscreen detection result of the face of the user in each ultraviolet image, key point information of each ultraviolet image, and key point information of the first preview image comprises:
separately performing key point detection on each ultraviolet image and the first preview image by using a deep learning method or a cascaded shape regression method, to obtain the key point information of each ultraviolet image and the key point information of the first preview image; and
separately detecting a sunscreen application status of the face of the user in each ultraviolet image by using a preset sunscreen detection model, to obtain the sunscreen detection result of the face of the user in each ultraviolet image.

18. The method according to any one of claims 1 to 17, wherein
a difference between capture time of each ultraviolet image and capture time of the first preview image is less than a time threshold.

19. The method according to claim 9, wherein
the first screen is an internal screen, and the second screen is an external screen; or
the first screen is a foldable screen, and the second screen is an external screen.

20. The method according to claim 18, wherein an area of the first screen is greater than an area of the second screen.

21. The method according to claim 10, wherein
the first camera is an ultraviolet camera, the second camera is a front-facing camera, and the third camera is a rear-facing camera.

22. The method according to any one of claims 1 to 21, further comprising:
display colors of sub-regions with different sunscreen application degrees are different in the facial region of the user in the target image.

23. A computer-readable storage medium, wherein the computer-readable storage medium stores instructions, and when the instructions are executed on an electronic device, the electronic device is enabled to perform the facial feature detection method according to any one of claims 1 to 22.

24. A computer program product, wherein the computer program product comprises instructions, and when the instructions are executed by one or more processors, the facial feature detection method according to any one of claims 1 to 22 are implemented.

25. An electronic device, comprising:
a memory, configured to store instructions; and
one or more processors, wherein when the instructions are executed by the one or more processors, the processor performs the facial feature detection method according to any one of claims 1 to 22.
